(19) Europäisches Patentamt / European Patent Office / Office européen des brevets

(11) **EP 4 663 374 A1**

(12) **EUROPEAN PATENT APPLICATION**
published in accordance with Art. 153(4) EPC

(43) Date of publication:
**17.12.2025 Bulletin 2025/51**

(21) Application number: **24753287.2**

(22) Date of filing: **05.02.2024**

(51) International Patent Classification (IPC):
**B29C 45/14** (2006.01)      **C08F 8/46** (2006.01)
**C08G 69/26** (2006.01)      **C08K 3/013** (2018.01)
**C08L 23/26** (2025.01)      **C08L 77/06** (2006.01)

(52) Cooperative Patent Classification (CPC):
**B29C 45/14; C08F 8/46; C08G 69/26; C08K 3/013; C08L 23/26; C08L 77/06**

(86) International application number:
**PCT/JP2024/003626**

(87) International publication number:
**WO 2024/166844 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.02.2023 JP 2023017664**

(71) Applicant: **Mitsui Chemicals, Inc.**
**Tokyo 104-0028 (JP)**

(72) Inventors:
• **AMANO, Akinori**
  **Chiba 299-0265 (JP)**
• **WASHIO, Isao**
  **Chiba 299-0265 (JP)**
• **DOI, Haruka**
  **Chiba 299-0265 (JP)**

(74) Representative: **Hoffmann Eitle**
**Patent- und Rechtsanwälte PartmbB**
**Arabellastraße 30**
**81925 München (DE)**

(54) **POLYAMIDE RESIN COMPOSITION FOR INSERT MOLDING, METAL RESIN COMPOSITE BODY AND METHOD FOR PRODUCING SAME**

(57)    Provided is a polyamide resin composition for insert molding that enhances the heat shock resistance of a molded body. The polyamide resin composition contains: a polyamide resin (A); a reinforcing material (B) in amount of 10 to 50% by mass; a modified polyolefin resin (C) in an amount of 1 to 10% by mass; and scale-like or plate-like inorganic particles (D) in an amount of 5% by mass or more but less than 40% by mass, the amount of the components being relative to the total amount of the polyamide resin composition. The polyamide resin (A) contains a polyamide resin (A1) which has a melting point (Tm) of 280°C or more, and the storage elastic modulus E' of the modified polyolefin resin (C) at -40°C is $7.0 \times 10^7$ Pa or less.

FIG. 1

## Description

Technical Field

The present invention relates to a polyamide resin composition for insert molding, a metal-resin composite, and a method for producing the metal-resin composite.

Background Art

Polyamide resin compositions have been known as molding materials. Polyamide resin compositions are widely used as materials for various parts such as automotive parts and electrical/electronic components, and are known for their excellent mechanical strength in molded articles.

For example, PTL 1 discloses a polyamide resin composition including a polyamide, glass fibers, glass flakes, and an impact resistance modifier. PTL 1 suggests that adjusting the composition ratio in the polyamide resin composition to achieve a tensile modulus greater than 9GPa can improve the rigidity and toughness of the polyamide resin composition.

In addition, PTL 2 discloses a polyamide resin composition including a polyamide, glass fibers, glass flakes, a heat stabilizer, and an additive. PTL 2 suggests that the polyamide resin composition have satisfactory mechanical properties such as elastic modulus.

Citation List

Patent Literature

PTL 1
Japanese Patent Application Laid-Open No. 2010-510374
PTL 2
Japanese Patent Application Laid-Open No. 2020-180280

Summary of Invention

Technical Problem

A polyamide resin composition may be used in insert molding where a resin member and a metal member are combined together to be molded. In the case of molded articles (metal-resin composites) obtained by insert molding using a polyamide resin composition, there is a demand for a polyamide resin composition that can suppress cracks that occur immediately after molding. In addition, there is a demand for a polyamide resin composition having high heat shock resistance that can withstand cold-heat shock when the environmental temperature changes to a lower or higher level, as such a metal-resin composite is used for automotive parts.

The present invention has been made in view of the above circumstances, and an object of the present invention is to provide a polyamide resin composition for insert molding that can suppress cracks occurring immediately after molding and increase the heat shock resistance of a metal-resin composite, as well as a metal-resin composite using the polyamide resin composition.

Solution to Problem

One aspect of the present invention to solve the above problems relates to polyamide resin compositions described in the following [1] to [13].

[1] A polyamide resin composition for insert molding, the polyamide resin composition including: polyamide resin (A); a reinforcing material (B) with a content of 10 mass% or more and 50 mass% or less based on a total mass of the polyamide resin composition; a modified polyolefin resin (C) with a content of 1 mass% or more and 10 mass% or less based on the total mass of the polyamide resin composition; and an inorganic particle (D) with a content of 5 mass% or more and less than 40 mass% based on the total mass of the polyamide resin composition, the inorganic particle (D) being flake-shaped or plate-shaped, in which
a storage modulus E' of the modified polyolefin resin (C) at -40°C is $7.0 \times 10^7$ Pa or less.

[2] The polyamide resin composition according to [1], in which the polyamide resin (A) includes a polyamide resin (A1) having a melting point (Tm) of 280°C or higher as measured by a differential scanning calorimeter (DSC).

[3] The polyamide resin composition according to [2], in which the polyamide resin (A1) includes two or more types of polyamide resins having compositions different to each other.

[4] The polyamide resin composition according to [2] or [3], in which the polyamide resin (A) includes a polyamide resin (A2) having a heat of fusion ($\Delta H$) of 5 J/g or less as measured by differential scanning calorimetry (DSC).

[5] The polyamide resin composition according to [1], in which the polyamide resin (A) includes a polyamide resin (A2) having a heat of fusion ($\Delta H$) of 5 J/g or less as measured by differential scanning calorimetry (DSC).

[6] The polyamide resin composition according to any one of [1] to [5], in which the content of the reinforcing material (B) is 20 mass% or more and 40 mass% or less based on the total mass of the polyamide resin composition.

[7] The polyamide resin composition according to any one of [1] to [6], in which the content of the inorganic particle (D) is 10 mass% or more and 30 mass% or less based on the total mass of the polyamide resin composition.

[8] The polyamide resin composition according to any one of [1] to [7], in which a density of the modified polyolefin resin (C) is 850 kg/m$^3$ or more and 880 kg/m$^3$ or less.

[9] The polyamide resin composition according to any one of [1] to [8], in which the modified polyolefin resin (C) includes a functional group structural unit with a content of 0.1 mass% or more and 5.0 mass% or less based on a total mass of the modified polyolefin resin (C).

[10] The polyamide resin composition according to [9], in which the content of the functional group structural unit is 0.5 mass% or more and 2.0 mass% or less based on the total mass of the modified polyolefin resin (C).

[11] The polyamide resin composition according to any one of [1] to [10], in which the modified polyolefin resin (C) has a feature such that when the modified polyolefin resin (C) is heated at a temperature increase rate of 10°C/min while dry air flows at a flow rate of 200 mL/min, a temperature at which a mass reduction percentage becomes 10% is 335°C or higher.

[12] The polyamide resin composition according to any one of [1] to [11], in which: a sum of the content of the reinforcing material (B) and the content of the inorganic particle (D) is 30 mass% or more and 55 mass% or less based on the total mass of the polyamide resin composition; and the content of the inorganic particle (D) is 20 mass% or more and 60 mass% or less based on the sum of the content of the reinforcing material (B) and the content of the inorganic particle (D).

[13] The polyamide resin composition according to any one of [1] to [12], in which: the polyamide resin (A1) includes a dicarboxylic acid-derived component unit (Ala) and a diamine-derived component unit (A1b); the dicarboxylic acid-derived component unit (Ala) includes, based on a total molar number of the dicarboxylic acid-derived component unit (A1b), 55 mol% or more and 75 mol% or less of a component unit derived from terephthalic acid and 25 mol% or more and 45 mol% or less of a component unit derived from isophthalic acid; and the diamine-derived component unit (A1b) includes a component unit derived from an aliphatic diamine having 4 to 15 carbon atoms.

One aspect of the present invention to solve the above problems relates to a molded article described in the following [14].

[14] A metal-resin composite, including: a metal member; and a resin member including the polyamide resin composition according to any one of [1] to [13], the polyamide resin composition being combined with the metal member.

One aspect of the present invention to solve the above problems relates to a molded article described in the following [15].

[15] A method for producing a metal-resin composite, the method including: placing a metal member in a mold; and injecting the polyamide resin composition according to any one of [1] to [13] into the mold to fill the mold in which the metal member is placed.

Advantageous Effects of Invention

The present invention can provide a polyamide resin composition for insert molding that can suppress cracks occurring immediately after molding and increase the heat shock resistance of a molded article, as well as a molded article using the polyamide resin composition.

Brief Description of Drawings

FIG. 1 is a schematic view illustrating an exemplary form of a metal-resin composite as a bus bar unit;
FIG. 2 is a configuration diagram illustrating an exemplary configuration of a moving object (vehicle) including the bus bar unit; and

FIG. 3A is a perspective view illustrating the shape of an insert test piece prepared to evaluate heat shock resistance in an example, FIG. 3B is a plan view of the insert test piece, and FIG. 3C is a cross-sectional view of the insert test piece taken along line C-C' illustrated in FIG. 3B.

Description of Embodiments

Hereinafter, the embodiments of the present invention will be described in detail. It should be noted that the present invention is not limited to the following embodiments.

1. Polyamide resin composition for insert molding

The polyamide resin composition for insert molding in the present embodiment includes a polyamide resin (A), a reinforcing material (B), a modified polyolefin resin (C), and flake-shaped or plate-shaped inorganic particles (D).

As described above, there is a demand for a polyamide resin composition for insert molding that can suppress cracks occurring immediately after molding. In addition, there is a demand for a polyamide resin composition for insert molding with increased heat shock resistance (hereinafter simply referred to as "polyamide resin composition"). According to the findings of the inventors, a metal-resin composite obtained by insert molding using a polyamide resin composition is prone to cracking when the environmental temperature changes to a lower temperature, which is believed to reduce heat shock resistance.

Immediately after molding, the temperature decreases from the high temperature state during molding to room temperature (e.g., 25°C), causing the resin member containing the polyamide resin composition to shrink. When the temperature further drops below room temperature, the shrinkage of the resin member containing the polyamide resin composition becomes more pronounced. When the resin member shrinks, the difference in linear expansion coefficient between the resin member and the metal member is large, causing the resin member to shrink more than the metal member. At this time, stress related to the shrinkage of the resin member is believed to occur at the interface between the resin member and the metal member. Therefore, a metal-resin composite is considered to be particularly prone to cracking immediately after molding and during a temperature change to a lower temperature.

In contrast, the inventors found that crack occurrence immediately after molding can be suppressed and heat shock resistance can be increased by adding a modified polyolefin resin (C) having a storage modulus E' of $7.0 \times 10^7$ Pa or less at -40°C, and flake-shaped or plate-shaped inorganic particles (D) to the polyamide resin composition containing a reinforcing material (B).

The polyamide resin composition in a molten state is poured into a mold during insert molding. At this time, the below-described reinforcing material B is believed to be arranged such that the long side direction thereof (length direction in a case of a fibrous reinforcing material and long diameter direction in a case of a granular reinforcing material) is parallel to the flow direction of the polyamide resin composition. Therefore, it is considered that the difference in linear expansion coefficient between the resin member and the metal member can be reduced, particularly in the flow direction.

Similarly, the inorganic particles (D) are believed to be arranged such that their long sides are aligned with the flow direction. Here, the inorganic particles (D) are longer than the reinforcing material (B) in the direction orthogonal to the flow direction, and therefore, it is considered that the difference in linear expansion coefficient between the resin member and the metal member can be reduced also in the orthogonal direction as well. As a result, it is believed that cracks occurring immediately after molding due to the difference in the linear expansion coefficient between the resin member and the metal member can be suppressed.

In addition, a modified polyolefin resin (C) having a storage modulus E' of $7.0 \times 10^7$ Pa or less at -40°C can lower the elastic modulus of the polyamide resin composition even at a low temperature, thereby imparting flexibility to the resin member. Therefore, it is believed that the stress generated by the shrinkage of the resin member at a low temperature can be alleviated, thereby suppressing crack occurrence. Thus, it is possible to alleviate the stress caused by the difference in linear expansion coefficient between the resin member and the metal member when cold-heat shocks are repeatedly applied, thereby suppressing crack occurrence in the resin member.

Moreover, flake-shaped or plate-shaped inorganic particles (D) occupy a larger proportion of the area spreading on the plane of the polyamide resin composition than spherical inorganic particles. Therefore, the permeation of oxygen into the polyamide resin composition can be reduced and the oxidative degradation of the modified polyolefin resin (C) can be reduced. As a result, it is believed that the decline in the function of the modified polyolefin resin (C) to impart flexibility to the resin member due to oxidative degradation can be prevented, thereby suppressing crack occurrence in the resin member.

For these reasons, it is believed that crack occurrence immediately after molding in a resin member containing the polyamide resin composition can be suppressed, and heat shock resistance can be increased.

1-1. Polyamide resin (A)

In the present embodiment, the polyamide resin (A) may contain only a crystalline polyamide resin, only an amorphous polyamide resin, or may contain both of these resins, but preferably contains at least a crystalline semi-aromatic polyamide resin. More specifically, the polyamide resin (A) preferably contains a polyamide resin (A1) having a melting point (Tm) of 280°C or higher as measured by a differential scanning calorimeter (DSC). Herein, "crystalline polyamide resin" refers to polyamide resin with a heat of fusion ($\Delta$H) of 5J/g or more as measured by differential scanning calorimetry (DSC).

1-1-1. Polyamide resin (A1)

By having crystallinity, the polyamide resin (A1) can increase the tensile strength and elastic modulus of a resin member containing the polyamide resin composition. The polyamide resin (A1) may be a polyamide resin including a component unit (A1a) derived from a dicarboxylic acid (herein, a component unit derived from a dicarboxylic acid is also simply referred to as "dicarboxylic acid-derived component unit") and a component unit (A1b) derived from a diamine (herein, a component unit derived from a diamine is also simply referred to as "diamine-derived component unit"). The following describes the case where the polyamide resin (A1) contains the dicarboxylic acid-derived component unit (A1a) and the diamine-derived component unit (A1b).

(Dicarboxylic acid-derived component unit (A1a))

The dicarboxylic acid-derived component unit (A1a) may include, for example, a component unit derived from an aromatic dicarboxylic acid, a component unit derived from an alicyclic dicarboxylic acid, or a component unit derived from an aliphatic dicarboxylic acid having 4 to 20 carbon atoms. Among these, from the viewpoint of obtaining a polyamide resin composition with high crystallinity, tensile strength, and elastic modulus, the dicarboxylic acid-derived component unit (A1a) preferably includes a unit derived from an aromatic or alicyclic dicarboxylic acid, and more preferably, a component unit derived from an aromatic dicarboxylic acid.

Examples of the aromatic dicarboxylic acid include terephthalic acid and aromatic carboxylic acids other than terephthalic acid. From the viewpoint of increasing the crystallinity of the polyamide resin, the dicarboxylic acid-derived component unit (A1a) preferably includes a component unit derived from terephthalic acid.

Examples of the terephthalic acid include terephthalic acid and terephthalic acid esters. Among these, terephthalic acid is preferred.

Examples of aromatic dicarboxylic acids other than terephthalic acid include isophthalic acid, 2-methylterephthalic acid, and naphthalene dicarboxylic acid. Among these, isophthalic acid is preferred.

Examples of the alicyclic dicarboxylic acid include cyclohexanedicarboxylic acid and esters thereof.

The aliphatic dicarboxylic acid is an aliphatic dicarboxylic acid having 4 to 20 carbon atoms, preferably 6 to 12 carbon atoms. Examples of such aliphatic dicarboxylic acids include adipic acid, azelaic acid, and sebacic acid. Among these, adipic acid and sebacic acid are preferred.

The content of the component unit derived from an aromatic dicarboxylic acid or an alicyclic dicarboxylic acid is preferably 45 mol% or more and 100 mol% or less based on the total molar number of the dicarboxylic acid-derived component unit (A1a), and more preferably 55 mol% or more and 100 mol% or less. When the content is 45 mol% or more, the crystallinity of the polyamide resin can be further increased.

The dicarboxylic acid-derived component unit (A1a) preferably includes 45 mol% or more and 100 mol% or less of the component unit derived from terephthalic acid based on the total molar number of the dicarboxylic acid-derived component unit (a1), and more preferably 90 mol% or more and 100 mol% or less. When the content of the component unit derived from terephthalic acid is 45 mol% or more, it is easier to increase the melting point of the polyamide resin (A), and the tensile strength and elastic modulus of an obtained molded article can be increased.

When the dicarboxylic acid-derived component unit (A1a) includes the component unit derived from terephthalic acid, the dicarboxylic acid-derived component unit (A1a) preferably further includes a component unit derived from isophthalic acid. In this case, the dicarboxylic acid-derived component unit (A1a) preferably includes 55 mol% or more and 75 mol% or less of the component unit derived from terephthalic acid and 25 mol% or more and 45 mol% or less of the component unit derived from isophthalic acid, and more preferably 65 mol% or more and 75 mol% or less of the component unit derived from terephthalic acid and 25 mol% or more and 35 mol% or less of the component unit derived from isophthalic acid. When the content of isophthalic acid is 25 mol% or more, the degree of crystallization of the polyamide resin (A1) can be appropriately reduced. This allows the shrinkage rate of the resin member to be appropriately reduced. Therefore, the stress generated between the resin member and the metal member can be reduced, and the heat shock resistance of the polyamide resin composition can be further increased. When the content of isophthalic acid is 45 mol% or less, extreme reduction in the degree of crystallization of the polyamide resin (A1) can be prevented, and extreme reduction in the tensile strength of the resin member can be prevented.

The content of the component unit derived from an aliphatic dicarboxylic acid having 4 to 20 carbon atoms is preferably 0 mol% or more and 55 mol% or less based on the total molar number of the dicarboxylic acid-derived component unit (A1a), and more preferably 0 mol% or more and 45 mol% or less.

(Diamine-derived component unit (A1b))

The diamine-derived component unit (A1b) may include, for example, a component unit derived from an aliphatic diamine having 4 to 18 carbon atoms, a component unit derived from an alicyclic diamine having 4 to 20 carbon atoms, and an aromatic diamine. Among these, the diamine-derived component unit (A1b) preferably includes a component unit derived from an aliphatic diamine having 4 to 18 carbon atoms.

It is preferable that the polyamide resin (A1) is a semi-aromatic polyamide in which, when the dicarboxylic acid-derived component unit (A1a) includes a component unit derived from an aromatic dicarboxylic acid, the diamine-derived component unit (A1b) includes a component unit derived from an aliphatic diamine having 4 to 18 carbon atoms.

The above-described aliphatic diamine is an aliphatic diamine having 4 to 18 carbon atoms, preferably 4 to 15 carbon atoms. Examples of such aliphatic diamines include linear alkylenediamines having 4 to 18 carbon atoms and branched alkylenediamines having 4 to 18 carbon atoms (alkylenediamines with side chains).

Examples of the linear alkylenediamines include 1,4-diaminobutane, 1,6-diaminohexane, 1,7-diaminoheptane, 1,8-diaminooctane, 1,9-diaminononane, 1,10-diaminodecane, 1,11-diaminoundecane, and 1,12-diaminododecane. Among these, 1,6-diaminohexane, 1,9-nonanediamine, and 1,10-diaminodecane are preferred. The linear alkylenediamines may be contained alone or in combination of two or more thereof.

The content of the component unit derived from a linear alkylenediamine is preferably 40 mol% or more and 100 mol% or less based on the total molar number of the diamine-derived component unit (A1b), and more preferably 40 mol% or more and 80 mol% or less.

Examples of the branched alkylenediamines include 1-butyl-1,2-diaminoethane, 2,2-dimethyldiaminopropane, 1,1-dimethyl-1,4-diaminobutane, 1-ethyl-1,4-diaminobutane, 1,2-dimethyl-1,4-diaminobutane, 1,3-dimethyl-1,4-diaminobutane, 1,4-dimethyl-1,4-diaminobutane, 2,3-dimethyl-1,4-diaminobutane, 2-methyl-1,5-diaminopentane, 2,5-dimethyl-1,6-diaminohexane, 2,4-dimethyl-1,6-diaminohexane, 3,3-dimethyl-1,6-diaminohexane, 2,2-dimethyl-1,6-diaminohexane, 2,2,4-trimethyl-1,6-diaminohexane, 2,4,4-trimethyl-1,6-diaminohexane, 2,4-diethyl-1,6-diaminohexane, 2,3-dimethyl-1,7-diaminoheptane, 2,4-dimethyl-1,7-diaminoheptane, 2,5-dimethyl-1,7-diaminoheptane, 2,2-dimethyl-1,7-diaminoheptane, 2-methyl-4-ethyl-1,7-diaminoheptane, 2-ethyl-4-methyl-1,7-diaminoheptane, 2,2,5,5-tetramethyl-1,7-diaminoheptane, 3-isopropyl-1,7-diaminoheptane, 3-isooctyl-1,7-diaminoheptane, 2-methyl-1,8-diaminooctane, 1,3-dimethyl-1,8-diaminooctane, 1,4-dimethyl-1,8-diaminooctane, 2,4-dimethyl-1,8-diaminooctane, 3,4-dimethyl-1,8-diaminooctane, 4,5-dimethyl-1,8-diaminooctane, 2,2-dimethyl-1,8-diaminooctane, 3,3-dimethyl-1,8-diaminooctane, 4,4-dimethyl-1,8-diaminooctane, 3,3,5-trimethyl-1,8-diaminooctane, 2,4-diethyl-1,8-diaminooctane, and 5-methyl-1,9-diaminononane. Among these, 2-methyl-1,5-diaminopentane is more preferred.

The content of the component unit derived from a branched alkylenediamine is preferably 0 mol% or more and 60 mol% or less based on the total molar number of the diamine-derived component unit (A1b), and more preferably 20 mol% or more and 60 mol% or less.

When the diamine-derived component unit (A1b) contains the component units derived from linear and branched alkylenediamines in the above-described amounts, the melting point of the polyamide resin (A) can be lowered to a level where the polyamide resin composition does not cause gas burning during molding. In addition, the melt flowability of the polyamide resin composition during molding can be further increased, and the creep resistance of the molded article at a high temperature can be improved.

In a case where the diamine-derived component unit (A1b) includes both the component unit derived from a linear alkylenediamine having 4 to 18 carbon atoms and the component unit derived from a branched alkylenediamine having 4 to 18 carbon atoms, when the content of the component unit derived from the linear alkylenediamine is 99 mol% or less based on the sum of the molar numbers of the both component units, the melt flowability during molding can be further increased. In addition, when the content of the component unit derived from the branched alkylenediamine is 50 mol% or less based on the sum of the molar numbers, the crystallization rate of the polyamide resin (A) is less likely to slow down, and heat resistance tends to become satisfactory.

The diamine-derived component unit (A1b) preferably includes a component unit derived from an aliphatic diamine having 4 to 15 carbon atoms when the dicarboxylic acid-derived component unit (A1a) includes the component unit derived from isophthalic acid.

In this case, the content of the component unit derived from an aliphatic diamine having 4 to 15 carbon atoms is preferably 30 mol% or more and 100 mol% or less based on the total molar number of the diamine-derived component unit (A1b), and more preferably 70 mol% or more and 100 mol% or less.

Examples of the alicyclic diamine having 4 to 20 carbon atoms include 1,4-diaminocyclohexane, 1,3-diaminocyclohexane, 1,3-bis(aminomethyl)cyclohexane, 2,5-bisaminomethylnorbornane, and 2,6-bisaminomethylnorbornane. Examples of the aromatic diamine include m-xylylenediamine.

The content of the component unit derived from an alicyclic diamine having 4 to 20 carbon atoms may be 0 mol% or more and 75 mol% or less based on the total molar number of the diamine-derived component unit (A1b), and is preferably 35 mol% or more and 65 mol% or less.

The content of the component unit derived from an aromatic diamine may be 0 mol% or more and 50 mol% or less based on the total molar number of the diamine-derived component unit, and is preferably 0 to 30 mol%.

Each structural unit and its ratio in the polyamide resin (A1) can be calculated from the charge ratio during the preparation of the polyamide resin (A1) or measured by the NMR method.

In the case of $^1$H-NMR measurement, for example, a nuclear magnetic resonance apparatus (ECX400 model manufactured by JEOL Ltd.) is used, and the conditions are as follows: the solvent is deuterated ortho-dichlorobenzene, the sample concentration is 20 mg/0.6 mL, the measurement temperature is 120°C, the observed nucleus is $^1$H (400 MHz), the sequence is single pulse, the pulse width is 5.12 $\mu$s (45° pulse), the repetition time is 7.0 seconds, and the number of accumulations is 500 or more. The reference chemical shift is set to 0 ppm for the hydrogen of tetramethylsilane, but similar results can be obtained by using the peak derived from residual hydrogen in deuterated ortho-dichlorobenzene as the reference value for the chemical shift at 7.10 ppm. Peaks such as $^1$H derived from functional group-containing compounds can be assigned by a conventional method.

In the case of $^{13}$C-NMR measurement, for example, a nuclear magnetic resonance apparatus (ECP500 model manufactured by JEOL Ltd.) is used as the measuring device, and the conditions are as follows: the solvent is ortho-dichlorobenzene/deuterated benzene (80/20 vol%) mixed solvent, the measurement temperature is 120°C, the observed nucleus is $^{13}$C (125 MHz), single pulse proton decoupling, 45° pulse, repetition time is 5.5 seconds, the number of accumulations is 10,000 or more, and 27.50 ppm is set as the reference value for the chemical shift. Assignment of various signals is performed based on a conventional method, and quantification can be performed based on the integrated value of signal intensity.

Specific examples of the polyamide resin (A1) include polyamide 6T6I, polyamide 6T66, polyamide 6TDT, and polyamide 9T.

The polyamide resin (A1) preferably includes two or more types of polyamide resins having compositions different to each other. More specifically, the polyamide resin (A1) preferably includes the first polyamide resin in an amount of 50 mass% or more based on the total mass of the polyamide resin (A1) and a second polyamide resin having a melting point (Tm) or heat of fusion ΔH lower than the first polyamide resin in an amount smaller than the first polyamide resin based on the total mass of the polyamide resin (A1). This allows the crystallinity of the polyamide resin (A1) to be appropriately reduced compared to when only one type of polyamide resin is included. As a result, the difference in the linear expansion coefficient between the resin member and the metal member can be reduced, thereby increasing heat shock resistance.

In the polyamide resin (A1), at least some of the terminal groups of the molecules thereof may be blocked with a terminal blocking agent from the viewpoint of increasing thermal stability during compounding and molding, and further increasing mechanical strength. The terminal blocking agent is preferably a monoamine when the molecular terminal is a carboxyl group, and a monocarboxylic acid when the molecular terminal is an amino group.

Examples of the monoamine include the following: aliphatic monoamines including methylamine, ethylamine, propylamine, butylamine, and the like; alicyclic monoamines including cyclohexylamine, dicyclohexylamine, and the like; and aromatic monoamines including aniline, toluidine, and the like. Examples of the monocarboxylic acid include the following: aliphatic monocarboxylic acids having 2 or more and 30 or less carbon atoms, including acetic acid, propionic acid, butyric acid, valeric acid, caproic acid, caprylic acid, lauric acid, tridecylic acid, myristic acid, palmitic acid, stearic acid, oleic acid, linoleic acid, and the like; aromatic monocarboxylic acids including benzoic acid, toluic acid, naphthalenecarboxylic acid, methylnaphthalenecarboxylic acid, phenylacetic acid, and the like; and alicyclic monocarboxylic acids including cyclohexanecarboxylic acid and the like. The aromatic monocarboxylic acid and the alicyclic monocarboxylic acid may have a substituent at the cyclic structure moiety.

(Physical properties of polyamide resin (A1))

In the present embodiment, the polyamide resin (A1) has a melting point (Tm) measured by a differential scanning calorimeter (DSC) of 280°C or higher, preferably 280°C or higher and 340°C or lower, and more preferably 290°C or higher and 330°C or lower. When the melting point (Tm) is 280°C or higher, the tensile strength and heat resistance of the polyamide resin composition and an obtained molded article can be further increased. In addition, when the melting point (Tm) is 340°C or lower, the polyamide resin composition can be easily molded without excessively increasing the molding temperature, thereby improving moldability.

The melting point (Tm) of the polyamide resin (A1) can be adjusted to fall in the above range by adjusting the composition of the polyamide resin (A1). For example, the melting point (Tm) can be increased by increasing the content ratio of the component unit derived from terephthalic acid in the polyamide resin (A1).

In addition, the polyamide resin (A1) preferably has a glass transition temperature (Tg) measured by a differential scanning calorimeter (DSC) of 70°C or higher and 145°C or lower, and more preferably 80°C or higher and 145°C or lower. When the glass transition temperature (Tg) is 90°C or higher, the temperature at which molecular mobility becomes active in a high-temperature environment increases, thereby suppressing molecular mobility and further increasing the heat resistance of the polyamide resin composition and an obtained molded article. In addition, when the glass transition temperature (Tg) is 145°C or lower, the flowability of the resin composition can be easily maintained without excessively increasing the mold temperature during molding, thereby improving moldability.

The heat of fusion ($\Delta$H) of the polyamide resin (A1) measured by differential scanning calorimetry (DSC) is preferably 20 J/g or more and 80 J/g or less. When the heat of fusion ($\Delta$H) of the polyamide resin (A1) is 20 J/g or more, the crystallinity increases, which tends to increase the heat resistance and the joining strength of the resin member. In addition, when the heat of fusion ($\Delta$H) is 80 J/g or less, the crystallinity of the polyamide resin (A1) can be appropriately reduced, thereby reducing the shrinkage rate of the resin member and minimizing the difference in the linear expansion coefficient between the resin member and the metal member. This can further increase the heat shock resistance of the molded product.

The heat of fusion ($\Delta$H), melting point (Tm), and glass transition temperature (Tg) of a polyamide resin can be measured using a differential scanning calorimeter (DSC220C, manufactured by Seiko Instruments Inc.).

Specifically, approximately 5 mg of a crystalline polyamide resin is sealed in an aluminum pan for measurement and heated from room temperature to 350°C at a rate of 10°C/min. For completely melting the resin, the resin was held at 350°C for 3 minutes and then cooled to 30°C at the rate of 10°C/min. After allowed to stand at 30°C for 5 minutes, the resin was heated a second time to 350°C at the rate of 10°C/min. The temperature (°C) of an endothermic peak in the second heating is defined as the melting point (Tm) of the crystalline polyamide resin, and the displacement point corresponding to the glass transition is defined as the glass transition temperature (Tg). The heat of fusion ($\Delta$H) is determined from the area of the endothermic peak during melting in the first heating process according to JIS K7122.

The intrinsic viscosity [$\eta$] of the polyamide resin (A1) measured in 96.5% sulfuric acid at a temperature of 25°C is preferably 0.6 dl/g or more and 1.5 dl/g or less. When the intrinsic viscosity [$\eta$] of the polyamide resin (A1) is 0.6 dl/g or more, the mechanical strength (such as tensile strength) of the molded article can be sufficiently increased, and when the intrinsic viscosity is 1.5 dl/g or less, the flowability during molding of the resin composition is less likely to be impaired. From the same viewpoint, the intrinsic viscosity [$\eta$] of the polyamide resin (A1) is more preferably 0.8 dl/g or more and 1.2 dl/g or less. The intrinsic viscosity [$\eta$] can be adjusted, for example, by the amount of terminal blocking of the polyamide resin (A1).

The intrinsic viscosity [$\eta$] of the polyamide resin (A1) can be measured as follows. Specifically, 0.5 g of the polyamide resin (A1) is dissolved in 50 ml of 96.5% sulfuric acid solution to prepare a sample solution. The falling time of the obtained solution at 25°C $\pm$ 0.05°C is calculated using an Ubbelohde viscometer, and the intrinsic viscosity is calculated based on the following equation.

$$[\eta] = \eta SP/(C \times (1 + 0.205\eta SP))$$

[$\eta$]: intrinsic viscosity (dl/g)
$\eta$SP: specific viscosity
C: sample concentration (g/dl)
t: falling time of sample solution (seconds)
t0: falling time of blank sulfuric acid (seconds)

$$\eta SP = (t - t0)/t0$$

The polyamide resin (A1) can be produced by a method the same as for known polyamide resins, for example, by polycondensation of a dicarboxylic acid and a diamine in a homogeneous solution. Specifically, the polyamide resin can be produced by heating a dicarboxylic acid and a diamine in the presence of a catalyst as described in WO 03/085029 to obtain a low-order condensate, and then imparting a shear stress to a melt of the low-order condensate and subjecting the melt to polycondensation.

The dicarboxylic acid-derived component unit of the polyamide resin (A1) may include a component unit derived from a biomass-derived dicarboxylic acid, and the diamine-derived component unit may include a component unit derived from a biomass-derived diamine. In addition, the polyamide resin (A1) may be a biomass-derived polyamide resin (A1) obtained by polymerizing a raw material group including a biomass-derived raw material.

The content of the polyamide resin (A1) is preferably 25.00 mass% or more and 80.00 mass% or less based on the total mass of the polyamide resin composition, more preferably 30.00 mass% or more and 80.00 mass% or less, and even more preferably 35.00 mass% or more and 80.00 mass% or less. When the content is 25.00 mass% or more, the tensile strength of the polyamide resin composition can be further increased. When the content is 80.00 mass% or less, the polyamide resin composition can include other components such as the modified polyolefin resin (C) described below in to further increase properties such as heat shock resistance of the resin member containing the polyamide resin composition.

1-1-2. Polyamide resin (A2)

In the present embodiment, the polyamide resin (A) preferably includes a polyamide resin (A2) having a heat of fusion (ΔH) of 5 J/g or less as measured by differential scanning calorimetry (DSC). The polyamide resin (A2) has lower crystallinity than the polyamide resin (A1), thereby reducing the degree of crystallization during molding of the polyamide resin composition. As a result, the shrinkage rate of the resin member containing the polyamide resin composition can be reduced, thereby reducing the stress generated between the resin member and the metal member. Consequently, cracks in the resin member caused by shrinkage of the resin member immediately after insert molding can be suppressed. In addition, it is considered that the shrinkage rate can be reduced, and thus when the environmental temperature is lowered, stress is less likely to accumulate in a molded product, and cracks in the resin member can also be suppressed, thereby increasing the heat shock resistance of the polyamide resin composition.

It is preferable that the melting point (Tm) of the polyamide resin (A2) is substantially not measurable in differential scanning calorimetry (DSC). The term "melting point (Tm) is substantially not measurable" refers to a case where, in the measurement method described above, a displacement point corresponding to the melting point is substantially not observed.

The heat of fusion (ΔH) of the polyamide resin (A2) is 5 J/g or less, and is more preferably 0 J/g. When the heat of fusion (ΔH) of the polyamide resin (A2) is 5 J/g or less, the crystallinity of the polyamide resin (A2) becomes appropriately low, thereby increasing the flexibility of the resin member containing the polyamide resin composition. The polyamide resin (A2) preferably exhibits amorphous properties. The heat of fusion (ΔH) can be measured by the same method as described for the polyamide resin (A1).

The polyamide resin (A2) may be any polyamide resin as long as the heat of fusion (ΔH) thereof is 5 J/g or less. The polyamide resin (A2) may be a polyamide resin including, for example, a dicarboxylic acid-derived component unit (A2a) and a diamine-derived component unit (A2b). Hereinafter, the case where the polyamide resin (A2) includes a dicarboxylic acid-derived component unit (A2a) and a diamine-derived component unit (A2b) will be described.

(Dicarboxylic acid-derived component unit (A2a))

The dicarboxylic acid-derived component unit (A2a) preferably includes a component unit derived from isophthalic acid. Inclusion of the component unit derived from isophthalic acid can further reduce the crystallinity of the polyamide resin (A2).

The content of the component unit derived from isophthalic acid is preferably 40 mol% or more and 100 mol% or less based on the total molar number of the dicarboxylic acid-derived component unit (A2a) in the polyamide resin (A2), and more preferably 50 mol% or more and 100 mol% or less. When the content of the isophthalic acid component unit is 40 mol% or more, the crystallinity of the polyamide resin (A2) can be further reduced.

The dicarboxylic acid-derived component unit (A2a) may further include a component unit derived from another dicarboxylic acid, other than the component unit derived from isophthalic acid, as long as it does not impair the effects of the present invention. Examples of the other dicarboxylic acids include aromatic dicarboxylic acids other than isophthalic acid, such as terephthalic acid, 2-methylterephthalic acid, and naphthalenedicarboxylic acid, as well as aliphatic dicarboxylic acids and alicyclic dicarboxylic acids. The aliphatic dicarboxylic acids and alicyclic dicarboxylic acids may be the same as the above-described aliphatic dicarboxylic acids and alicyclic dicarboxylic acids, respectively. Among these, aromatic dicarboxylic acids other than isophthalic acid are preferred, and terephthalic acid is more preferred.

When the dicarboxylic acid-derived component unit (A2a) further includes a component unit derived from terephthalic acid, the molar ratio of the component unit derived from isophthalic acid to the component unit derived from terephthalic acid (isophthalic acid-derived component unit / terephthalic acid-derived component unit) is preferably 55/45 to 95/5, more preferably 60/40 to 90/10, and even more preferably 60/40 to 80/20. When the molar ratio is within the above range, the crystallinity of the polyamide resin (A2) can be further reduced, thereby more effectively suppressing cracks that occur immediately after insert molding of the resin member containing the polyamide resin composition. In addition, it is possible to further suppress crack occurrence at a low temperature and increase heat shock resistance.

(Diamine-derived component unit (A2b))

The diamine-derived component unit (A2b) preferably includes a component unit derived from an aliphatic diamine having 4 to 15 carbon atoms.

It is preferable that the polyamide resin (A2) is a semi-aromatic polyamide in which, when the dicarboxylic acid-derived component unit (A2a) includes a component unit derived from isophthalic acid, the diamine-derived component unit (A2b) includes a component unit derived from an aliphatic diamine having 4 to 15 carbon atoms.

Examples of the aliphatic diamine having 4 to 15 carbon atoms include aliphatic diamines the same as those described for the polyamide resin (A1). Among these, the aliphatic diamine is preferably 1,6-diaminohexane.

The content of the component unit derived from an aliphatic diamine is preferably 50 mol% or more and 100 mol% or less based on the total molar number of the diamine-derived component unit (A2b), and more preferably 60 mol% or more and 100 mol% or less.

The diamine-derived component unit (A2b) may further include a component unit derived from another diamine, other than the component units derived from an aliphatic diamine, as long as it does not impair the effects of the present invention. Examples of the other diamines include alicyclic diamines and aromatic diamines. Examples of the alicyclic diamines and aromatic diamines include alicyclic diamines and aromatic diamines the same as those described for the polyamide resin (A). The content of the component unit derived from another diamine can be, for example, 10 mol% or less based on the total molar number of the diamine-derived component unit (A2b).

Each structural unit and its ratio in the polyamide resin (A2) can be calculated from the charge ratio during the preparation of the polyamide resin (A2) or measured by the NMR method. The NMR method can be performed by the same method as described for the polyamide resin (A2).

Specific examples of the polyamide resin (A2) include polycondensates of isophthalic acid/terephthalic acid/1,6-diaminohexane/bis(3-methyl-4-aminocyclohexyl)methane, polycondensates of isophthalic acid/terephthalic acid/1,6-diaminohexane (e.g., polyamide 6I6T), and polycondensates of isophthalic acid/2,2,4-trimethyl-1,6-diaminohexane/2,4,4-trimethyl-1,6-diaminohexane. Among these, a polycondensate of isophthalic acid/terephthalic acid/1,6-diaminohexane is preferred. The polyamide resin (B) may be contained alone or in combination of two or more.

The polyamide resin (A2) preferably has an intrinsic viscosity [$\eta$] of 0.4 dl/g or more and 1.6 dl/g or less and more preferably 0.5 dl/g or more and 1.2 dl/g or less, as measured in 96.5% sulfuric acid at a temperature of 25°C. The intrinsic viscosity [$\eta$] of the polyamide resin (A2) can be measured in the same manner as the intrinsic viscosity [$\eta$] of the polyamide resin (A1).

The polyamide resin (A2) can be produced in the same manner as described for the polyamide resin (A1). In addition, the dicarboxylic acid-derived component unit of the polyamide resin (A2) may include a component unit derived from a biomass-derived dicarboxylic acid, and the diamine-derived component unit may include a component unit derived from a biomass-derived diamine. In addition, the polyamide resin (A2) may be a biomass-derived polyamide resin (A2) obtained by polymerizing a raw material group including a biomass-derived raw material.

The content of the polyamide resin (A2) is preferably 2.0 mass% or more and 20.0 mass% or less based on the total mass of the polyamide resin (A), and more preferably 5.0 mass% or more and 15.0 mass% or less. When the content is 2.0 mass% or more, the crystallinity of the entire polyamide resin (A) decreases further, thereby increasing the flexibility of the resin member and suppressing the occurrence of cracks immediately after insert molding. For the same reasons, crack occurrence at a low temperature can be further suppressed, thereby increasing the heat shock resistance of the resin member. In addition, when the content is 20.0 mass% or less, the polyamide resin composition can include a satisfactory amount of the polyamide resin (A1), thereby further increasing the tensile strength and elastic modulus of the resin member containing the polyamide resin composition.

The heat of fusion $\Delta H$ of the polyamide resin (A) is preferably 10 J/g or more and 70 J/g or less, and more preferably 20 J/g or more and 60 J/g or less. When the heat of fusion is 10 J/g or more, the crystallinity of the polyamide resin (A) is further increased, making it easier to increase the tensile strength and elastic modulus of the resin member. Moreover, when the heat of fusion is 70 J/g or less, the crystallinity of the polyamide resin (A) can be appropriately reduced, thereby decreasing the shrinkage rate of the resin member and reducing the difference in linear expansion coefficient between the resin member and the metal member. As a result, the heat shock resistance of the molded product can be further increased.

1-2. Reinforcing material (B)

The reinforcing material (B) can impart high mechanical strength (such as tensile strength) to the polyamide resin composition. Examples of the reinforcing material (B) include fibrous reinforcing materials such as glass fibers, wollastonite, potassium titanate whiskers, calcium carbonate whiskers, aluminum borate whiskers, magnesium sulfate whiskers, zinc oxide whiskers, milled fibers, and chopped fibers, as well as granular reinforcing materials. These reinforcing materials may be used alone or in combination. Among them, the reinforcing material (B) is preferably a fibrous reinforcing material, more preferably glass fibers, wollastonite, or potassium titanate whiskers, and even more preferably glass fibers or wollastonite, because it is easy to increase the mechanical strength of the molded article.

The average fiber length of the fibrous reinforcing material may be, for example, 1 $\mu$m or more and 20 mm or less, and preferably 5 $\mu$m or more and 10 mm or less, from the viewpoint of the moldability of the polyamide resin composition and the mechanical strength and heat resistance of the resin member containing the polyamide resin.

The average fiber length and average fiber diameter of the fibrous reinforcing material can be measured by the following method.

1) After a polyamide resin composition is dissolved in a hexafluoroisopropanol/chloroform solution (0.1/0.9 vol%), the resulting liquid is filtered and the obtained residue is collected.

2) The residue obtained in the above-described step 1) is dispersed in water, and the fiber length (Li) and the fiber diameter (di) of each of randomly selected 300 fibers are measured with an optical microscope (magnification: 50×). Then, qi is defined as the number of fibers whose fiber length is Li, and the weight average length (Lw) is calculated based on the following equation and used as the average fiber length of the fibrous reinforcing material.

$$\text{Weight average length (Lw)} = (\Sigma qi \times Li^2) / (\Sigma qi \times Li)$$

In the similar manner, ri is defined as the number of fibers whose fiber diameter is Di, and the weight average diameter (Dw) is calculated based on the following equation and used as the average fiber diameter of the fibrous reinforcing material.

$$\text{Weight average diameter (Dw)} = (\Sigma ri \times Di^2) / (\Sigma ri \times Di)$$

The content of the reinforcing material (B) is preferably 10 mass% or more and 50 mass% or less based on the total mass of the polyamide resin composition, and more preferably 20 mass% or more and 40 mass% or less. When the content is 10 mass% or more, the tensile strength of the resin member containing the polyamide resin composition can be increased, and when the content is 20 mass% or more, the tensile strength can be further increased. When the content is 50 mass% or less, the flowability during molding of the polyamide resin composition can be less likely to decrease, and with 40 mass% or less, the flowability can be even less likely to decrease.

1-3. Modified polyolefin resin (C)

The modified polyolefin resin (C) is an olefin polymer having a polyolefin unit and a functional group structural unit. The modified polyolefin resin (C) can be obtained by subjecting a polyolefin resin before modification to a modification reaction using a compound containing a functional group structural unit. The modified polyolefin resin is easily dispersed in the polyamide resin (A), and flexibility can be easily imparted to the resin member.

Examples of the polyolefin include ethylene polymers, propylene polymers, and butene polymers, as well as copolymers of these olefins. Among these, an ethylene-α-olefin copolymer is preferred.

Examples of the α-olefin constituting the ethylene-α-olefin copolymer other than ethylene include propylene, 1-butene, 1-pentene, 1-hexene, 4-methyl-1-pentene, 1-octene, and 1-decene. Among these, 1-butene and 1-octene are preferred, and 1-butene is more preferred. These α-olefins can be used alone or in combination of two or more. The content of a component unit derived from an α-olefin in the ethylene-α-olefin copolymer is preferably 0.5 mol% or more and 30 mol% or less, and more preferably 1 mol% or more and 20 mol% or less.

Examples of the above functional group structural unit include functional groups containing a heteroatom. Examples of the functional groups containing a heteroatom include carboxylic acid groups (including anhydride carboxylic acid groups), ester groups, ether groups, aldehyde groups, and ketone groups. Among these, carboxylic acid groups (including anhydride carboxylic acid groups) are preferred.

Examples of compounds containing carboxylic acid groups include α,β-unsaturated carboxylic acids such as acrylic acid, methacrylic acid, maleic acid, fumaric acid, itaconic acid, and phthalic acid. Examples of compounds containing anhydride carboxylic acid groups include dicarboxylic acid anhydrides having α,β-unsaturated bonds such as maleic anhydride, itaconic anhydride, and phthalic anhydride. Among these, maleic anhydride is preferred.

The content (modification amount) of the functional group structural unit in the modified polyolefin resin (C) is preferably 0.1 mass% or more and 5.0 mass% or less, more preferably 0.2 mass% or more and 3.0 mass% or less, and even more preferably 0.5 mass% or more and 2.0 mass% or less. When the content is 0.1 mass% or more, the modified polyolefin resin (C) becomes easier to disperse in the polyamide resin (A), thereby further increasing the flexibility of the resin member and suppressing the occurrence of cracks in an obtained molded product. Moreover, when the content is 5.0 mass% or less, the viscosity of the polyamide resin composition can be appropriately reduced, preventing the decrease in injection flowability during molding. In addition, the amount of gas generated during molding can be reduced, thereby suppressing gas burns on the molded product and mold contamination.

The content (modification amount) of the functional group structural unit in the modified polyolefin resin (C) can be calculated from the charge ratio during the preparation of the modified polyolefin resin (C) or measured by NMR method.

The NMR method can be used in the same manner as described for the polyamide resin (A).

The storage modulus E' of the modified polyolefin resin (C) at -40°C is $7.0 \times 10^7$ Pa or less. From the viewpoint of further suppressing crack occurrence in a resin member at a low temperature and increasing heat shock resistance, the storage modulus E' is more preferably $6.5 \times 10^7$ Pa or less, and even more preferably $6.0 \times 10^7$ Pa or less. The lower limit of the storage modulus E' is not particularly limited, but can be, for example, $7.0 \times 10^6$ Pa.

The density of the modified polyolefin resin (C) is preferably 800 kg/m$^3$ or more and 1000 kg/m$^3$ or less, and more preferably 850 kg/m$^3$ or more and 880 kg/m$^3$ or less. When the density of the modified polyolefin resin (C) is 800 kg/m$^3$ or more, the tensile strength of the resin member containing the polyamide resin composition is less likely to be impaired, and when the density is 850 kg/m$^3$ or more, the tensile strength is even less likely to be impaired. When the density is 1000 kg/m$^3$ or less, moderate flexibility can be imparted to the resin member, making it easier to suppress crack occurrence at a low temperature. Therefore, it is easier to increase the heat shock resistance of the resin member. When the density is 880 kg/m$^3$ or less, it is even easier to increase the heat shock resistance. The density of the modified polyolefin resin (C) can be measured in accordance with JIS K7112:1999.

The modified polyolefin resin (C) preferably has a melt flow rate (MFR) of 0.01 g/10 min to 20 g/10 min at 230°C under a load of 2.16kg according to ASTM D1238, more preferably 0.05 g/10 min to 20 g/10 min, and even more preferably 0.1 g/10 min to 10 g/10 min. Having an MFR of 0.01 g/10 min or more can prevent the decrease in flowability during the molding of the polyamide resin composition. In addition, having 20 g/10 min or less can prevent the decrease in tensile strength of the molded article.

The modified polyolefin resin (C) is preferably has a feature such that when the modified polyolefin resin (C) is heated at a temperature increase rate of 10°C/min while dry air flows at a flow rate of 200 mL/min, the temperature at which the mass reduction percentage becomes 10% is 335°C or higher (hereinafter, the temperature is referred to as "10% mass reduction temperature"), and the temperature is more preferably 450°C or lower. When the temperature is 335°C or higher, it is easier to reduce the decomposition of the modified polyolefin resin, which can more easily impart flexibility to the resin member and increase heat shock resistance. In addition, it is possible to reduce the amount of gas generated during molding, thereby suppressing gas burning of the molded product and contamination of the mold. The upper limit of the above temperature is not particularly limited, but is, for example, 450°C. Herein, "dry air" refers to air with a pressure dew point of 15°C or lower at 0.78 to 0.93MPa.

The modified polyolefin resin (C) is obtained by graft modification of the polyolefin resin before modification with a compound containing a functional group structural unit.

Graft modification can be carried out by various conventionally known methods. For example, the following methods are possible: a melt modification method in which a polyolefin resin before modification is melted using an extruder and graft copolymerized by adding a graft monomer; and a solution modification method in which a polyolefin resin before modification is dissolved in a solvent and graft copolymerized by adding a graft monomer. In either case, it is preferable to carry out the reaction in the presence of a radical initiator to efficiently graft copolymerize the graft monomer.

Specific examples of the modified polyolefin resin (C) include maleic anhydride-modified ethylene-$\alpha$-olefin copolymers. Examples of commercially available modified polyolefin resins (C) include TAFMER MH5020 (storage modulus E' = $3.4 \times 10^7$ Pa), TAFMER MH5010 (storage modulus E' = $3.2 \times 10^7$ Pa), and TAFMER MH7010 (storage modulus E' = $5.9 \times 10^7$ Pa) (all manufactured by Mitsui Chemicals, Inc.).

The content of the modified polyolefin resin (C) is 1 mass% or more and 10 mass% or less based on the total mass of the polyamide resin composition, more preferably 2 mass% or more and 8 mass% or less, and even more preferably 3 mass% or more and 7 mass% or less. Having the above content of 1 mass% or more can increase the flexibility of the resin member containing the polyamide resin composition, suppress crack occurrence in the resin member at a low temperature, and improve heat shock resistance. In addition, the modified polyolefin resin (C) can undergo a cross-linking reaction with the polyamide resin (A). Here, when the above content is 10 mass% or less, the degree of cross-linking between the polyamide resin (A) and the modified polyolefin resin (C) can be kept appropriately low, thereby preventing the decrease in flowability during the molding of the polyamide resin composition. In addition, having the above content of 10 mass% or less allows for satisfactory inclusion of other components such as the polyamide resin (A) and the reinforcing material (B), thereby further increasing the tensile strength and elastic modulus of the resin member containing the polyamide resin composition.

1-4. Inorganic particles (D)

In the present embodiment, the polyamide resin composition includes flake-shaped or plate-shaped inorganic particles (D).

Herein, "flake-shaped" or "plate-shaped" inorganic particles refer to inorganic particles whose surface is composed of multiple flat surfaces, and whose area when observed from a predetermined angle (plan view) is larger than the area when observed from an angle orthogonal to the observation direction.

Examples of materials for the inorganic particles (D) include glass, mica, kaolin, clay, and alumina.

The weight average particle size of the inorganic particles (D) is preferably 20 $\mu$m or more and 700 $\mu$m or less, more preferably 25 $\mu$m or more and 180 $\mu$m or less, and even more preferably 30 $\mu$m or more and 170 $\mu$m or less. When the weight average particle size is 20 $\mu$m or more, it is easier to reduce the difference in the linear expansion coefficient between the resin member and the metal member in the direction orthogonal to the flow direction of the polyamide resin composition during molding. Therefore, the heat shock resistance of the resin member can be further increased. In addition, when the weight average particle size is 700 $\mu$m or less, it is easier to reduce the difference in the linear expansion coefficient between the resin member and the metal member in the flow direction. When the material of the inorganic particles (D) is glass, the weight average particle size of the inorganic particles (D) is preferably 30 $\mu$m or more and 700 $\mu$m or less, more preferably 40 $\mu$m or more and 180 $\mu$m or less, and even more preferably 50 $\mu$m or more and 170 $\mu$m or less. When the material of the inorganic particles (D) is mica, the weight average particle size of the inorganic particles (D) is preferably 20 $\mu$m or more and 180 $\mu$m or less, more preferably 25 $\mu$m or more and 150 $\mu$m or less, and even more preferably 30 $\mu$m or more and 100 $\mu$m or less. The particle size of the inorganic particles (D) can be measured by laser diffraction when the weight average particle size is 30 $\mu$m or less, and by dry sieving when the weight average particle size is more than 30 $\mu$m.

The aspect ratio (particle size/thickness) of the inorganic particles (D) is preferably 25 or more and 70 or less, more preferably 30 or more and 60 or less. The thickness of an inorganic particle (D) refers to the length of the inorganic particle (D) extending in the observation direction when the inorganic particle (D) is viewed in plan view. Having the above aspect ratio within the above range can increase the surface area of the inorganic particle (D). As a result, the length of the inorganic particles (D) in the direction orthogonal to the flow direction of the polyamide resin composition during molding can be increased, thereby further reducing the difference in linear expansion coefficient between the metal member and the resin member in the orthogonal direction, and further increasing the heat shock resistance of the resin member. The aspect ratio of the inorganic particles (D) can be determined by measuring the average particle size and average thickness, and dividing the value of the average particle size by the value of the average thickness.

The average thickness of the inorganic particles (D) is preferably 0.5 $\mu$m or more and 6.0 $\mu$m or less, more preferably 1.5 $\mu$m or more and 5.0 $\mu$m or less. The average thickness of the inorganic particles (D) can be measured by the water surface particle film method or by length measurement using a scanning electron microscope. When measuring the average thickness using a scanning electron microscope, for example, the length of random 10 particles can be measured, and their average can be used as the average thickness.

The inorganic particles (D) are preferably surface-treated with a surface treatment agent or a sizing agent such as an epoxy compound, an isocyanate compound, an organosilane compound, an organotitanate compound, and an organoborane. By surface-treating the inorganic particles (D), the affinity between the inorganic particles (D) and the polyamide resin (A) can be increased. As a result, the interfacial strength between the inorganic particles (D) and the polyamide resin (A) can be increased, thereby further reducing the difference in linear expansion coefficient between the resin member and the metal member, and it is considered that the heat shock resistance of the resin member can be further increased. The above surface treatment agent is preferably an epoxy compound, an isocyanate compound, or an organosilane compound.

Examples of commercially available inorganic particles (D) include glass flakes (Fleka REFG-315, Fleka REFG-312, Fleka REFG-301, all manufactured by Nippon Sheet Glass Co., Ltd.), mica particles (Repco Mica M-60, Repco Mica M-200, Repco Mica M-400, all manufactured by Repco Co., Ltd.), and the like.

The content of the inorganic particles (D) is 5 mass% or more and less than 40 mass% based on the total mass of the polyamide resin composition, and preferably 10 mass% or more and 30 mass% or less. Having the above content of 5 mass% or more can further suppress crack occurrence in the resin member immediately after molding by reducing the difference in linear expansion coefficient between the resin member and the metal member in the orthogonal direction, and having 10 mass% or more can further increase the heat shock resistance. When the above content is less than 40 mass%, the content of the reinforcing material (B) can be increased, thereby increasing the strength in the flow direction of the polyamide resin composition to the mold during molding. As a result, for example, when extruding the polyamide resin composition in a strand shape, the strand is less likely to break, and the decrease in moldability of the polyamide resin composition can be prevented. In addition, when the content is 30 mass% or less, the decrease in moldability can be further suppressed.

The sum of the content of the reinforcing material (B) and the content of the inorganic particles (D) is preferably 30 mass% or more and 55 mass% or less based on the total mass of the polyamide resin composition, more preferably 40 mass% or more and 50 mass% or less.

When the sum of the both contents is within the above range, the content of the inorganic particles (D) is preferably 20 mass% or more and 60 mass% or less based on the sum, more preferably 30 mass% or more and 50 mass% or less. Among the reinforcing material (B) and the inorganic particles (D), increasing the proportion of the content of the inorganic particles (D) can further increase the heat shock resistance of the resin member, but the proportion of the content of the reinforcing material (B) becomes lower, and therefore, it is difficult to sufficiently increase the tensile strength and elastic modulus of the resin member. Therefore, by having the content of the inorganic particles (D) within the above range, it is possible to sufficiently increase the tensile strength and elastic modulus of the resin member while further increasing the heat shock resistance.

## 1-5. Other components

The polyamide resin composition may include another known component.

Examples of other components include nucleating agents, lubricants, colorants, heat stabilizers, corrosion resistance improving agents, drip inhibitors, ion scavengers, elastomers (rubber), antistatic agents, release agents, antioxidants (phenols, amines, sulfur compounds, and phosphorus compounds), other heat stabilizers (lactone compounds, vitamin E compounds, hydroquinone compounds), light stabilizers (benzotriazoles, triazines, benzophenones, benzoates, hindered amines, and oxanilides), other polymers (polyolefins, olefin copolymers such as ethylene-propylene copolymers, ethylene-1-butene copolymers, propylene-1-butene copolymers, polystyrene, polycarbonate, polyacetal, polysulfone, polyphenylene oxide, fluororesin, silicone resin, and LCP).

## 1-5-1. Nucleating agent

A nucleating agent can promote the crystallization of the polyamide resin (A). Therefore, it is possible to further increase the tensile strength and elastic modulus of the resin member.

Examples of the nucleating agent include metal salt-based compounds such as sodium 2,2-methylenebis(4,6-di-t-butylphenyl)phosphate, aluminum tris(p-t-butylbenzoate), and stearates, sorbitol-based compounds such as bis(p-methylbenzylidene)sorbitol and bis(4-ethylbenzylidene)sorbitol, and inorganic substances such as talc, calcium carbonate, and hydrotalcite. Among these, talc is preferred from the viewpoint of further increasing the crystallinity of a molded article. These nucleating agents may be used alone or in combination.

Talc generally contains hydrous magnesium silicate ($SiO_2$: 58% to 64%, MgO: 28% to 32%, $Al_2O_3$: 0.5% to 5%, or $Fe_2O_3$: 0.3% to 5%) as the main component thereof. The average particle size of talc is not particularly limited, but is preferably 1 to 15 $\mu$m. When the average particle size of talc is within the above range, it is easy to disperse talc in the polyamide resin (A) without impairing the flowability of the polyamide resin composition. From the same viewpoint, the average particle size of talc is more preferably 1 to 7.5 $\mu$m. The average particle size of talc can be measured by laser diffraction methods, for example, using a Shimadzu particle size distribution analyzer SALD-2000A manufactured by Shimadzu Corporation.

The content of the nucleating agent is preferably 0.10 parts by mass or more and 5.00 parts by mass or less, and more preferably 0.10 parts by mass or more and 3.00 parts by mass or less, based on the total mass of the polyamide resin composition. When the content of the nucleating agent is within the above range, it is more likely to sufficiently increase the crystallinity of the molded article and to obtain satisfactory mechanical strength.

## 1-5-2. Lubricant

The lubricant increases the injection flowability of the polyamide resin composition and makes the appearance of an obtained molded article favorable. The lubricant may be a fatty acid metal salt such as an oxycarboxylic acid metal salt or a higher fatty acid metal salt.

The oxycarboxylic acid constituting the oxycarboxylic acid metal salt may be an aliphatic oxycarboxylic acid or an aromatic oxycarboxylic acid. Examples of the aliphatic oxycarboxylic acid include aliphatic oxycarboxylic acids having 10 or more and 30 or less carbon atoms, such as $\alpha$-hydroxymyristic acid, $\alpha$-hydroxypalmitic acid, $\alpha$-hydroxystearic acid, $\alpha$-hydroxyeicosanoic acid, $\alpha$-hydroxydocosanoic acid, $\alpha$-hydroxytetracosanoic acid, $\alpha$-hydroxyhexacosanoic acid, $\alpha$-hydroxyoctacosanoic acid, $\alpha$-hydroxytriacontanoic acid, $\beta$-hydroxymyristic acid, 10-hydroxydecanoic acid, 15-hydroxypentadecanoic acid, 16-hydroxyhexadecanoic acid, 12-hydroxystearic acid, and ricinoleic acid. Examples of the aromatic oxycarboxylic acid include salicylic acid, m-oxybenzoic acid, p-oxybenzoic acid, gallic acid, mandelic acid, and tropic acid.

Examples of the metal constituting the oxycarboxylic acid metal salt include alkali metals such as lithium, and alkaline earth metals such as magnesium, calcium, and barium.

Among these, the oxycarboxylic acid metal salt is preferably a 12-hydroxystearic acid metal salt, and more preferably magnesium 12-hydroxystearate or calcium 12-hydroxystearate.

Examples of the higher fatty acid constituting the higher fatty acid metal salt include higher fatty acids having 15 or more and 30 or less carbon atoms, such as stearic acid, oleic acid, behenic acid, and montanic acid.

Examples of the metal constituting the higher fatty acid metal salt include calcium, magnesium, barium, lithium, aluminum, zinc, sodium, and potassium.

Among these, the higher fatty acid metal salt is preferably calcium stearate, magnesium stearate, barium stearate, calcium behenate, sodium montanate, or calcium montanate.

The content of the lubricant is preferably 0.01 mass% or more and 1.30 mass% or less based on the total mass of the polyamide resin composition. When the content of the lubricant is 0.01 mass% or more, the flowability during molding is more likely to be increased and the appearance of an obtained molded product is more likely to be improved. When the content of the lubricant is 1.30 mass% or less, gas generated by the decomposition of the lubricant is less likely to be generated during molding, and the appearance of the product is more likely to become satisfactory.

1-5-3. Colorants

A colorant imparts a desired color tone to a molded article. The colorant is not particularly limited, but may be a pigment. Examples of the pigment include inorganic pigments such as carbon black, alumina, titanium oxide, chromium oxide, iron oxide, zinc oxide, and barium sulfate, and organic pigments such as azo pigments, phthalocyanine pigments, quinacridone pigments, perylene pigments, anthraquinone pigments, thioindigo pigments, and indanthrene pigments.

The content of the colorant is preferably 0.01 mass% or more and 5.00 mass% or less and more preferably 0.10 mass% or more and 2.00 mass% or less, based on the total mass of the polyamide resin composition. A colorant imparts a desired color tone to a molded article. The colorant is not particularly limited, but may be a pigment. Examples of the pigment include inorganic pigments such as carbon black, alumina, titanium oxide, chromium oxide, iron oxide, zinc oxide, and barium sulfate, and organic pigments such as azo pigments, phthalocyanine pigments, quinacridone pigments, perylene pigments, anthraquinone pigments, thioindigo pigments, and indanthrene pigments.

The content of the colorant is preferably 0.01 mass% or more and 5.00 mass% or less and more preferably 0.10 mass% or more and 2.00 mass% or less, based on the total mass of the polyamide resin composition.

1-6. Production method

The polyamide resin composition can be produced by a method of mixing the above-described polyamide resin and, when necessary, another component by a known resin kneading method, such as a method using a Henschel mixer, V-blender, ribbon blender, or tumbler blender for mixing, or by a method of performing mixing, then further melt-kneading with a uniaxial extruder, multiaxial extruder, kneader, or Banbury mixer, and then granulating or pulverizing.

2. Composite of metal and resin (Insert molded body)

The metal-resin composite according to the present embodiment includes the following: a metal member; and a resin member including the above-described polyamide resin composition that has been combined with the metal member.

2-1. Resin member

The resin member includes the polyamide resin composition described above. The proportion of the polyamide resin composition in the total mass of the resin member is preferably 50.00 mass% or more, more preferably 60.00 mass% or more, and still more preferably 70.00 mass% or more. The upper limit of the proportion of the polyamide resin composition in the total mass of the resin member is not particularly limited, but can be 100.00 mass% or less, may be 90.00 mass% or less, or may be 80.00 mass% or less.

2-2. Metal member

As long as the metal member is a member made of metal, the material and shape thereof are not particularly limited. For example, the material of the metal member may be iron, copper, nickel, gold, silver, platinum, cobalt, zinc, lead, tin, titanium, chromium, aluminum, magnesium, manganese, or an alloy such as stainless steel, brass, or phosphor bronze.

These materials can be selected according to the application of the metal-resin composite. For example, when thermal conductivity is required, aluminum, an aluminum alloy, magnesium, a magnesium alloy, copper, and a copper alloy are preferred, and the copper and the copper alloy are more preferable. In addition, when weight reduction and satisfactory strength are required, aluminum, an aluminum alloy, magnesium, and a magnesium alloy are preferable.

The surface of the metal member is preferably subjected to a roughening treatment. The method for roughening treatment of the surface is not particularly limited, and the surface may be subjected to roughening treatment by a chemical treatment such as immersion in a treatment liquid containing a base or an acid or etching, or by a physical treatment such as laser or blasting.

It is preferable that the center-to-center distance (pitch) of a plurality of protrusions formed by the roughening treatment on the surface of the roughened metal member is 5 nm or more and 500 $\mu$m or less. When the center-to-center distance of the plurality of protrusions is 5 nm or more, recesses between the protrusions are appropriately large, making it easy to cause the resin member to sufficiently enter into the recesses during joining, thereby further improving the joining strength between the metal member and the resin member. Also, when the center-to-center distance of the plurality of protrusions is 500 $\mu$m or less, the recesses do not become too large, thereby further suppressing the occurrence of gaps at the metal-resin interface of the metal-resin composite and increasing airtightness. From the same viewpoint, the center-to-center distance of the plurality of protrusions is more preferably 5 $\mu$m or more and 250 $\mu$m or less. The center-to-center distance of the plurality of protrusions is an average value obtained from the distances each between the center of one protrusion and the center of a protrusion adjacent to the one protrusion.

The center-to-center distance of the plurality of protrusions can be measured by removing the resin member from the metal-resin composite by mechanical peeling or solvent cleaning, and observing the exposed surface of the metal member using an electron microscope, laser microscope, or surface roughness measuring apparatus.

Specifically, when the center-to-center distance of the plurality of protrusions is less than 0.5 $\mu$m, it is possible to observe the protrusions using an electron microscope. When the center-to-center distance of the plurality of protrusions is 0.5 $\mu$m or more, it is possible to observe the protrusions using a laser microscope or a surface roughness measuring apparatus. For example, in a photograph of the surface of a metal member taken with an electron microscope or a laser microscope, 50 protrusions are randomly selected, and the center-to-center distances for the protrusions are measured. Then, after integrating all the measured values of the center-to-center distances for the protrusions, a value obtained by dividing the integrated value by 50 (averaged value) is used as the "center-to-center distance of a plurality of protrusions."

The average value of the ten-point average roughness (Rz) in an evaluation length of 4 mm on the surface of the metal member that has been subjected to the roughening treatment is not particularly limited, but is preferably more than 2 $\mu$m, more preferably more than 2 $\mu$m and 50 $\mu$m or less, and still more preferably more than 2.5 $\mu$m and 45 $\mu$m or less.

The average value of the ten-point average roughness (Rz) can be measured in accordance with JIS B0601 (ISO 4287). Specifically, the ten-point average roughness (Rz) on a total of six straight line portions, including three arbitrary straight line portions parallel to each other and three arbitrary straight line portions orthogonal to the three straight line portions, is measured, and the average value from the measured ten-point average roughness is used as the average value of Rz.

The average length (RSm) of the roughness curve element on the surface of the metal member subjected to the roughening treatment is preferably 0.5 $\mu$m or more and 500 $\mu$m or less. In particular, from the viewpoint of further increasing the joining strength, it is preferable that the center-to-center distance of a plurality of protrusions is less than 0.5 $\mu$m, and the average length (RSm) of the roughness curve element is 0.5 $\mu$m or more and 500 $\mu$m or less. The average length of the roughness curve element can also be measured in the same manner as described above, in accordance with JIS B0601 (ISO 4287).

3. Method for producing metal-resin composite

Embodiment 3 of the present invention relates to the method for producing the metal-resin composite described above. The method for producing the metal-resin composite is not particularly limited, but includes, for example, (1) a step of preparing a metal member, (2) a step of placing the metal member in a mold and injecting a molten polyamide resin composition into the mold to fill the mold, and (3) a step of cooling the polyamide resin composition. The step (1) of preparing a metal member may include a step of performing roughening treatment of the surface of the metal member.

3-1. Preparation of metal member

First, the metal member described above is prepared. At this time, at least a part of the surface of the metal member may be subjected to a roughening treatment, or a metal member having an uneven structure on at least a part of the surface may be prepared.

The method for performing roughening treatment of the surface of the metal member is not particularly limited. For example, the following can be used: a method using laser processing, a method of immersing a metal member in an aqueous inorganic base solution such as NaOH or an aqueous inorganic acid solution such as HCl or $HNO_3$, a method of treating a metal member by anodization, a displacement crystallization method of etching using an acid-based etchant (preferably, an aqueous acid-based etchant solution containing an inorganic acid, a second iron ion, a second copper ion, and, as necessary, a manganese ion, aluminum chloride hexahydrate, sodium chloride, and the like), a method of immersing a metal member in an aqueous solution such as hydrazine hydrate, ammonia, and a watersoluble amine compound, a method of hot water treatment, or the like.

3-2. Insert molding

Next, the metal member is placed in a mold, and the molten polyamide resin composition is injected into the mold to fill the mold. As a result, the softened or molten polyamide resin composition is combined with the prepared metal member.

Specifically, first, the prepared metal member is placed in the cavity (space) of the injection mold. The polyamide resin composition is then injected into the cavity of the mold to fill the cavity so that at least a part of the polyamide resin composition comes into contact with the metal member. As a result, the injected molten polyamide resin composition comes into contact with the surface of the metal member. The temperature of the injection mold at this time may be any temperature at which the polyamide resin composition can be melted into a state suitable for injection molding, and is not particularly limited, but may be, for example, 100°C to 350°C.

As the mold (die), a known injection mold, for example, a mold for rapid heat cycle molding (RHCM, heat and cool molding) or a core-back mold for foam molding can be used.

3-3. Cooling

Thereafter, by cooling and solidifying the polyamide resin composition that has come into contact with the surface of the metal member, a metal-resin composite in which the resin member containing the polyamide resin composition is combined with the metal member can be obtained.

4. Application

The metal-resin composite described above is suitably used in various applications where the metal-resin composite is applied or its application is being considered.

Examples of the application include structural components for vehicles, vehicle-mounted accessories, housings for electronic devices, housings for home appliances, structural components, machine components, various automobile components, components for electronic devices, furniture, household goods such as kitchen utensils, medical devices, components for building materials, other structural components, components for exterior applications, and the like.

More specifically, examples of the application include, in the case of vehicle-related applications, instrument panels, console boxes, door knobs, door trims, shift levers, pedals, glove boxes, bumpers, bonnets, fenders, trunks, doors, roofs, pillars, seats, steering wheels, bus bars, terminals, motors, power conversion apparatuses (inverters and converters), ECU boxes, electrical components, engine peripheral components, drive system/gear peripheral components, intake/exhaust system components, cooling system components, and the like. In addition, precision electronic components such as connectors, relays, and gears are included.

In addition, the metal-resin composite can be used in a component for equipment that optimally designs heat management by combining the high thermal conductivity of a copper member and the heat insulating property of a resin member, for example, various home appliances. Examples of the above application include home appliances such as refrigerators, washing machines, vacuum cleaners, microwave ovens, air conditioners, lighting apparatuses, electric water heaters, televisions, clocks, ventilation fans, projectors, and speakers, and electronic information apparatuses such as personal computers, mobile phones, smartphones, digital cameras, tablet PCs, portable music players, portable game machines, chargers, and batteries, and the like.

Examples of other applications include components for lithium-ion secondary batteries, robots, and the like.

For example, the metal-resin composite can be used in a bus bar unit for a moving object (vehicle) such as an automobile.

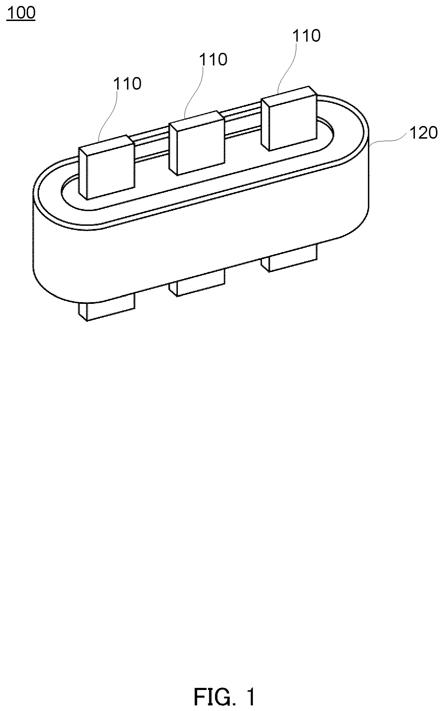

FIG. 1 is a schematic view illustrating an exemplary form of the metal-resin composite as a bus bar unit. Bus bar unit 100 includes bus bars 110, each of which is a conductor for supplying current to a corresponding member and is a conductive metal member (for example, a copper metal member), and holding member 120, which is a resin member described above and serves as a protection member for protecting bus bars 110.

Of the surfaces of bus bar 110 (namely, a metal member), the surface that comes into contact with holding member 120 is roughened, and holding member 120 which is a resin member (a resin member including the molded article of a polyamide resin composition) is bonded to the roughened surface.

Bus bar unit 100 can be used to electrically connect, via bus bar 110, a motor of a moving object with an inverter that controls the power supplied to the motor.

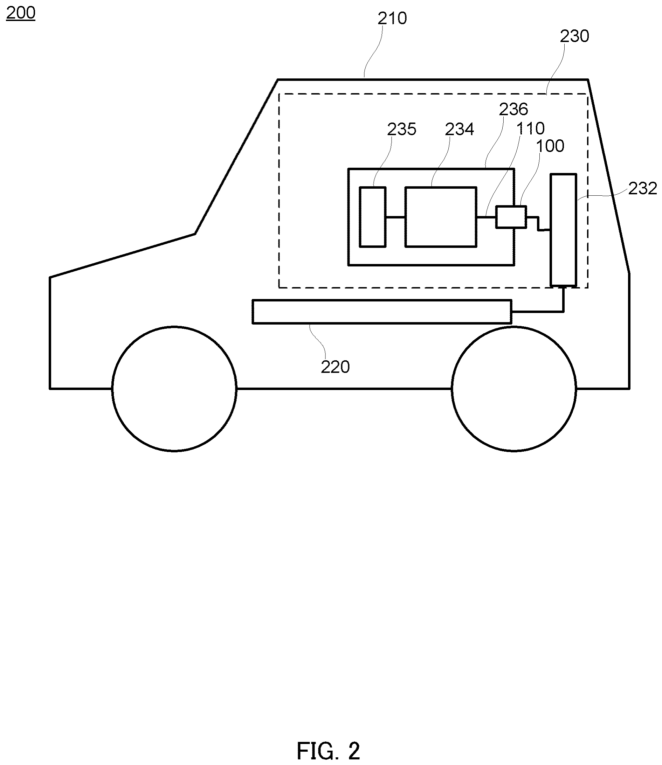

FIG. 2 is a configuration diagram illustrating an exemplary configuration of a moving object (vehicle) including bus bar unit 100. Moving object 200 includes machine body 210, power source 220 such as a secondary battery that supplies power for driving machine body 210, and drive unit 230 that drives machine body 210 with the power supplied from power source 220.

Drive unit 230 includes inverter 232 that controls power (current) from power source 220, motor 234 that rotates by receiving the power controlled by inverter 232, and bus bar unit 100 that includes bus bar 110 that connects inverter 232 with motor 234. Motor 234 is housed in motor case 236 together with reduction gear 235 that converts the rotation speed obtained by motor 234 into a rotation speed for driving machine body 210. Bus bar unit 100 is attached to motor case 236, and bus bar 110 extends from the inside to the outside of motor case 236 through bus bar unit 100.

A cooling liquid (coolant oil) for cooling motor 234 is stored inside motor case 236. In addition, at the connection portion between bus bar unit 100 and motor case 236, an airtight treatment is performed by a sealing member such as an O-ring, thereby preventing oil from leaking from the inside to the outside of motor case 236.

FIG. 2 illustrates an example in which moving object 200 is a vehicle such as an automobile, but moving object 200 may be any object as long as it is movable and includes a machine body and a drive unit. For example, in addition to the vehicle such as an automobile, a bike, and an electric bicycle, a railroad car, a ship, an aircraft, a drone, a robot, or the like may also be used as moving object 200.

Examples

Hereinafter, the present invention is described with reference to Examples. The Examples should not be construed as limiting the scope of the present invention.

1. Synthesis/preparation of material

1-1. Synthesis of polyamide resin (A)

<Preparation of polyamide resin (A-1) (6T6I)>

Into an autoclave with a capacity of 13.6 L, 2,800 g (24.1 mol) of 1,6-hexanediamine, 2,774 g (16.7 mol) of terephthalic acid, 1,196 g (7.2 mol) of isophthalic acid, 5.7 g ($5.4 \times 10^{-2}$ mol) of sodium hypophosphite monohydrate as a catalyst, 36.6 g (0.30 mol) of benzoic acid as a molecular weight regulator, and 545 g of distilled water were charged and the autoclave was purged with nitrogen. Stirring was started at 190°C, and the internal temperature was increased to 250°C over 3 hours. At this time, the internal pressure of the autoclave was increased to 3.0 MPa. After the reaction was continued for 1 hour, the autoclave was vented to the atmosphere through a spray nozzle installed at the bottom thereof, and a low-order condensate was extracted. The low-order condensate was then cooled to room temperature, ground to a particle size of 1.5 mm or less, and dried at 110°C for 24 hours. The obtained low-order condensate had a moisture content of 4,100 ppm and an intrinsic viscosity [η] of 0.15 dl/g.

Next, this low-order condensate was placed in a solid phase polymerization apparatus with shelves, and after purging with nitrogen, the temperature was increased to 180°C over about 1 hour and 30 minutes. Thereafter, the reaction was carried out for 1 hour and 30 minutes, and the temperature was lowered to room temperature. The intrinsic viscosity [n] of the obtained prepolymer was 0.20 dl/g.

Subsequently, the obtained prepolymer was subjected to melt polymerization in a twin-screw extruder with a screw diameter of 30 mm and an L/D of 36, at a barrel set temperature of 330°C, a screw rotation speed of 200 rpm, and a resin supply rate of 6 kg/h, to obtain a polyamide resin (A-1).

The obtained polyamide resin (A-1) had an intrinsic viscosity [η] of 1.00 dl/g, a melting point (Tm) of 330°C, a glass transition temperature (Tg) of 125°C, and a heat of fusion (ΔH) of 50 J/g. In addition, the composition of the obtained polyamide resin (A-1) was as follows: in the dicarboxylic acid-derived component unit, the content of the component unit derived from terephthalic acid was 70 mol% and the content of component unit derived from isophthalic acid was 30 mol%, and in the diamine-derived component unit, the content of the component unit derived from 1,6-diaminohexane was 100 mol%.

<Synthesis of polyamide resin (A-2) (6T66)>

A polyamide resin (A-2) was obtained in the same manner as in the synthesis of the polyamide resin (A-1) except that the raw materials were changed to 2,184 g (13.1 mol) of terephthalic acid, 2,800 g (24.1 mol) of 1,6-hexanediamine, and 1,572 g (10.8 mol) of adipic acid.

The obtained polyamide resin (A-2) had an intrinsic viscosity [η] of 0.80 dl/g, a melting point (Tm) of 310°C, a glass transition temperature (Tg) of 85°C, and a heat of fusion (ΔH) of 50 J/g. In addition, the composition of the obtained polyamide resin (A-2) was as follows: in the dicarboxylic acid-derived component unit, the content of the component unit derived from terephthalic acid was 55 mol% and the content of the component unit derived from adipic acid was 45 mol%, and in the diamine-derived component unit, the content of component unit derived from 1,6-diaminohexane was 100 mol%.

<Synthesis of Polyamide Resin (A-3) (6T66)>

A polyamide resin (A-3) was obtained in the same manner as in the synthesis of the polyamide resin (A-1) except that the raw materials were changed to 1,720 g (10.4 mol) of terephthalic acid, 2,800 g (24.1 mol) of 1,6-hexanediamine, and 1,849 g (12.7 mol) of adipic acid.

The obtained polyamide resin (A-3) had an intrinsic viscosity [η] of 0.90 dl/g, a melting point (Tm) of 295°C, a glass transition temperature (Tg) of 75°C, and a heat of fusion (ΔH) of 60 J/g. In addition, the composition of the obtained polyamide resin (A-3) was as follows: in the dicarboxylic acid-derived component unit, the content of the component unit derived from terephthalic acid was 45 mol% and the content of the component unit derived from adipic acid was 55 mol%, and in the diamine-derived component unit, the content of the component unit derived from 1,6-diaminohexane was 100 mol%.

<Synthesis of polyamide resin (A-4) (6TDT)>

A polyamide resin (A-4) was obtained in the same manner as in the synthesis of the polyamide resin (A-1) except that the raw materials were changed to 3,655 g (22.0 mol) of terephthalic acid, 1,312 g (11.3 mol) of 1,6-diaminohexane, and 1,312 g (11.3 mol) of 2-methyl-1,5-diaminopentane.

The obtained polyamide resin (A-4) had an intrinsic viscosity [η] of 0.90 dl/g, a melting point (Tm) of 300°C, a glass transition temperature (Tg) of 140°C, and a heat of fusion (ΔH) of 40 J/g. In addition, the composition of the obtained polyamide resin (A-4) was as follows: in the dicarboxylic acid-derived component unit, the content of the component unit derived from terephthalic acid was 100 mol%, and in the diamine-derived component unit, the content of the component unit derived from 1,6-diaminohexane was 50 mol% and the content of the component unit derived from 2-methyl-1,5-diaminopentane was 50 mol%.

<Synthesis of polyamide resin (A-5) (9T)>

Into an autoclave with a capacity of 20.0 L, 4537.7 g (27.3 mol) of terephthalic acid, 4385 g (27.5 mol) of a mixture of 1,9-nonanediamine and 2-methyl-1,8-octanediamine (1,9-nonanediamine : 2-methyl-1,8-octanediamine (molar ratio) = 80:20), 9.12 g ($8.6 \times 10^{-2}$ mol) of sodium hypophosphite monohydrate as a catalyst, 41.5 g (0.34 mol) of benzoic acid as a molecular weight regulator, and 2.5 L of distilled water charged and the autoclave was purged with nitrogen. Stirring was performed at 100°C for 30 minutes, and the temperature inside the autoclave was increased to 220°C over 2 hours. At this time, the internal pressure of the autoclave was increased to 2.00 MPa. After the reaction was continued for 2 hours, the temperature inside the autoclave was further increased to 230°C, and the reaction was continued for 2 hours while gradually removing steam from the autoclave and maintaining the pressure at 2 MPa. Next, the pressure was reduced to 1 MPa over 30 minutes, and the reaction was continued for 1 hour to obtain a prepolymer with an intrinsic viscosity [η] of 0.15 dl/g. This prepolymer was dried at 100°C under reduced pressure for 12 hours and ground to a particle size of 2 mm or less. This composition was prepared in a solid phase polymerization apparatus at 230°C and 13 Pa (0.1 mmHg) for 10 hours to obtain polyamide resin (A-5).

The obtained polyamide resin (A-5) had an intrinsic viscosity [η] of 1.20 dl/g, a melting point (Tm) of 300°C, and a glass transition temperature (Tg) of 125°C. In addition, the composition of the obtained polyamide resin (A-5) was as follows: in the dicarboxylic acid-derived component unit, the content of the component unit derived from terephthalic acid was 100 mol%, and in the diamine-derived component unit, the content of the component unit derived from 1,9-nonanediamine was 80 mol% and the content of the component unit derived from 2-methyl-1,8-octanediamine was 20 mol%.

<Synthesis of polyamide resin (A-6) (6I6T)>

A polyamide resin (A-6) was obtained in the same manner as the synthesis of the polyamide resin (A-1) except that the raw materials were changed to 2,774 g (16.7 mol) of isophthalic acid, 2,800 g (24.1 mol) of 1,6-diaminohexane, and 1,196 g (7.2 mol) of terephthalic acid.

The obtained polyamide resin (A-6) had an intrinsic viscosity [η] of 0.54 dl/g, a glass transition temperature (Tg) of 125°C, and a heat of fusion (ΔH) of 0 J/g, and no melting point (Tm) was measured. In addition, the composition of the obtained polyamide resin (A-6) was as follows: in the dicarboxylic acid-derived component unit, the content of the component unit derived from terephthalic acid was 30 mol% and the content of component the component unit derived from isophthalic acid was 70 mol%, and in the diamine-derived component unit, the content of the component unit derived from 1,6-diaminohexane was 100 mol%.

1-2. Reinforcing material (B)

Glass fiber (CS 03JA FT2A, average fiber diameter 10.5 μm, average fiber length 3 mm, manufactured by Owens Corning) was used.

1-3. Synthesis of modified polyolefin resin (C)

<Synthesis of modified polyolefin resin (C-1)>

Into a glass flask that had been sufficiently purged with nitrogen, 0.63 mg of bis(1,3-dimethylcyclopentadienyl) zirconium dichloride was charged, and 1.57 ml of a toluene solution of methylaluminoxane (Al; 0.13 mmol/liter) and 2.43 ml of toluene were further added to the glass flask to obtain a catalyst solution. Next, 912 ml of hexane and 320 ml of 1-butene were introduced into a stainless steel autoclave with an internal volume of 2 liters, which had been sufficiently purged with nitrogen, and the temperature in the system was raised to 80°C. Subsequently, 0.9 mmol of triisobutylaluminum and 2.0 ml of the catalyst solution prepared above (0.0005 mmol as Zr) were pressurized into the system with ethylene, and the polymerization reaction was initiated. By continuously supplying ethylene, the total pressure was maintained at 8.0 kg/cm$^2$-G, and polymerization was carried out at 80°C for 30 minutes. After introducing a small amount of ethanol into the system to stop the polymerization, the unreacted ethylene was purged. The obtained solution was dropped into a large excess of methanol to precipitate a white solid. The white solid was recovered by filtration, dried overnight under reduced pressure, and a white solid (ethylene-1-butene copolymer) was obtained.

The ethylene content of the ethylene-1-butene copolymer was 81 mol%. In addition, the density was 860 g/m$^3$, the MFR (ASTM D 1238, 190°C, 2.16 kg load) was 0.5 g/10 min, and the melting point was 35°C.

Subsequently, 100 parts by mass of the obtained ethylene-1-butene copolymer was mixed with 1.0 part by mass of maleic anhydride and 0.04 part by mass of peroxide (Perhexyne 25B, manufactured by NOF Corporation). The obtained mixture was subjected to melt graft modification using a twin-screw extruder set at 230°C to obtain a modified polyolefin resin (C-1).

The modification amount of the modified polyolefin resin (C-1) was 0.8 mass%. In addition, the density was 866 kg/m$^3$, the MFR (ASTM D 1238, 230°C, 2.16 kg load) was 0.27 g/10 min, and the storage modulus E' at -40°C was $3.4 \times 10^7$ Pa. In addition, the 10% mass reduction temperature was 357°C.

<Modified polyolefin resin (C-2)>

Maleic anhydride modified SEBS (Toughtec M1913, manufactured by Asahi Kasei Corporation) was used. The modification amount of the modified polyolefin resin (C-2) was 1.0 mass%. In addition, the density was 920 kg/m$^3$, the MFR (ASTM D 1238, 230°C, 2.16 kg load) was 5.0 g/10 min, and the storage modulus E' at -40°C was $2.4 \times 10^8$ Pa. In addition, the 10% mass reduction temperature was 340°C.

<Modified polyolefin resin (C-3)>

Maleic anhydride modified EPDM (KEPA 1130, manufactured by KUMHO POLYCHEM) was used. The density of the modified polyolefin resin (C-3) was 880 kg/m$^3$, the MFR (ASTM D 1238, 230°C, 2.16 kg load) was 3.0 g/10 min, and the storage modulus E' at -40°C was $7.9 \times 10^7$ Pa. In addition, the 10% mass reduction temperature was 328°C.

<Synthesis of modified polyolefin resin (C-4)>

Using a Henschel mixer, 100 parts by mass of linear low-density polyethylene (density: 0.92 g/cm3, MFR (190°C/2.16 kg load) 4 g/10 min), 1.0 part by mass of maleic anhydride, and 0.07 part by mass of peroxide (Perhexyne 25B, manufactured by NOF Corporation) were mixed. Then, the obtained mixture was subjected to melt graft modification using a 65 mm diameter single-screw extruder set at 230°C to obtain graft-modified polyethylene.

The modification amount of the obtained modified polyolefin resin (C-4) was 0.9 mass%. In addition, the density was 915 kg/m$^3$, the MFR (ASTM D 1238, 230°C, 2.16 kg load) was 0.7 g/10 min, and the storage modulus E' at -40°C was $1.5 \times 10^9$ Pa. In addition, the 10% mass reduction temperature was 421 °C.

1-4. Synthesis of polyolefin resin

Into a glass flask that had been sufficiently purged with nitrogen, 0.63 mg of bis(1,3-dimethylcyclopentadienyl) zirconium dichloride was charged, and 1.57 ml of a toluene solution of methylaluminoxane (Al; 0.13 mmol/liter) and 2.43 ml of toluene were further added to the glass flask to obtain a catalyst solution. Next, 912 ml of hexane and 320 ml of 1-butene were introduced into a stainless steel autoclave with an internal volume of 2 liters, which had been sufficiently purged with nitrogen, and the temperature in the system was raised to 80°C. Subsequently, 0.9 mmol of triisobutylaluminum and 2.0 ml of the catalyst solution prepared above (0.0005 mmol as Zr) were pressurized into the system with ethylene, and the polymerization reaction was initiated. By continuously supplying ethylene, the total pressure was maintained at 8.0 kg/cm$^2$-G, and polymerization was carried out at 80°C for 30 minutes. After introducing a small amount of ethanol into the system to stop the polymerization, the unreacted ethylene was purged. The obtained solution was dropped into a large excess of methanol to precipitate a white solid. The white solid was recovered by filtration, dried overnight under reduced pressure, and a white solid (ethylene-1-butene copolymer) was obtained.

The ethylene content of the ethylene-1-butene copolymer was 81 mol%. In addition, the density was 861 g/m$^3$, the MFR (ASTM D 1238, 230°C, 2.16 kg load) was 0.9 g/10 min, and the storage modulus E' at -40°C was $3.1 \times 10^7$ Pa.

1-5. Inorganic particles (D)

<Inorganic particles (D-1)>

Glass flakes (Fleka REFG-315, weight average particle size 160 $\mu$m, average thickness 5 $\mu$m, aspect ratio: 32, flake-shaped, surface treated with urethane compound (sizing agent) and amino silane compound (surface treatment agent), manufactured by Nippon Sheet Glass Co., Ltd.) were used.

<Inorganic particles (D-2)>

Mica particles 1 (Repco Mica M-60, weight average particle size 160 $\mu$m, average thickness 2.7 $\mu$m, aspect ratio: 60, flake-shaped, manufactured by Repco Co., Ltd.) were used.

<Inorganic particles (D-3)>

Mica particles 2 (Repco Mica M-200, weight average particle size 55 $\mu$m, average thickness 1.7 $\mu$m, aspect ratio: 33, flake-shaped, manufactured by Repco Co., Ltd.) were used.

<Inorganic particles (D-4)>

Mica particles 3 (Repco Mica M-400, weight average particle size 24 $\mu$m, aspect ratio: 28, flake-shaped, manufactured by Repco Co., Ltd.) were used.

The aspect ratio of each of the inorganic particles (D-1) to (D-4) was calculated by measuring the average particle size and average thickness of the inorganic particles and dividing the value of the average particle size by the value of the average thickness. The average particle size of each of the inorganic particles (D-2) to (D-3) was measured by the dry sieving method, and the average particle size of the inorganic particles (D-4) was measured by the laser diffraction method. The average thickness of the inorganic particles (D-1) was measured by length measurement using a scanning electron microscope, and the average thickness of the inorganic particles (D-2) to (D-4) was measured by the water surface particle film method.

1-6. Other components

1-6-1. Nucleating agent

Talc (average particle size of 6 $\mu$m) was used as a nucleating agent.

1-6-2. Lubricant

Sodium montanate was used as a lubricant.

1-6-3. Colorant

A masterbatch containing a pigment was used as a colorant.

2. Measurement

The physical properties of each of the above resins were measured by the following methods.

<Melting Point (Tm) and Glass Transition Temperature (Tg)>

The melting point (Tm) and the glass transition temperature (Tg) of a polyamide resin were measured using a differential scanning calorimetry (DSC220C, manufactured by Seiko Instruments Inc.). Specifically, approximately 5 mg of a polyamide resin was sealed in an aluminum pan for measurement, set for differential scanning calorimetry, and heated from room temperature to 350°C at the rate of 10°C/min. To completely melt the resin, the resin was held at 350°C for 3 minutes, and then cooled to 30°C at a rate of 10°C/min. After the resin was allowed to stand at 30°C for 5 minutes, the second heating was performed at 10°C/min to 350°C. The endothermic peak temperature (°C) in this second heating was used as the melting point (Tm) of the polyamide resin, and the displacement point corresponding to the glass transition was used as the glass transition temperature (Tg).

<Heat of fusion ($\Delta$H)>

The heat of fusion ($\Delta$H) of the polyamide resin was determined from the area of an exothermic peak of crystallization in the first temperature rising process in accordance with JIS K 7122 (2012).

(Intrinsic Viscosity [$\eta$])

The intrinsic viscosity [$\eta$] of the polyamide resin was determined by dissolving 0.5 g of the polyamide resin in 50 ml of a 96.5% sulfuric acid solution, measuring the falling time of the resulting solution at 25°C $\pm$ 0.05°C using an Ubbelohde viscometer, and calculating the intrinsic viscosity based on the equation: "[n] = $\eta$SP/(C(1 + 0.205$\eta$SP))".

[$\eta$]: intrinsic viscosity (dl/g)
$\eta$SP: specific viscosity
C: sample concentration (g/dl)
t: falling time of sample solution (seconds)
t0: falling time of blank sulfuric acid (seconds)

$$\eta SP = (t - t0)/t0$$

<Composition>

The composition of a modified polyolefin resin, specifically the content ratios (mol%) of ethylene and $\alpha$-olefin having 3 or more carbon atoms, as well as the content ratio ( mass%) of the functional group constitutional unit, were measured by $^{13}$C -NMR. The measurement conditions are as follows.

Measurement apparatus: Nuclear magnetic resonance apparatus (ECP500, manufactured by JEOL Ltd.)
Observation nucleus: $^{13}$C (125 MHz)
Sequence: Single pulse proton decoupling
Pulse width: 4.7 $\mu$s (45° pulse)
Repetition time: 5.5 seconds
Number of accumulations: 10,000 times or more
Solvent: Mixed solvent of ortho-dichlorobenzene/deuterated benzene (volume ratio: 80/20)
Sample concentration: 55 mg/0.6 mL
Measurement temperature: 120°C
Chemical shift reference value: 27.50 ppm

<Density>

The density of the modified polyolefin resin was measured at a temperature of 23°C using a density gradient tube in accordance with JIS K7112.

<Melt Flow Rate (MFR)>

The melt flow rate (MFR) of the modified polyolefin resin was measured in accordance with ASTM D1238 under a load of 2.16 kg at 230°C. The unit of the melt flow rate is g/10 min.

<Melting Point>

The melting point of the modified polyolefin resin was measured by differential scanning calorimetry (DSC).

<Storage Modulus E'>

The storage modulus E' of each modified polyolefin resin was determined as follows: a 500 $\mu$m pressed sheet of the resin was prepared by hot pressing, and the solid viscoelasticity was measured by heating the sheet from -100°C to 200°C under conditions of a frequency of 1 Hz, a temperature increase rate of 3°C/min, a strain of 0.05%, a chuck distance of 20 mm, a sample width of 2 mm, and under the nitrogen atmosphere using a solid viscoelasticity measuring device (DVA-225, manufactured by IT Measurement & Control Co., Ltd.), and the storage modulus E' at -40°C was calculated.

<10% Mass reduction temperature>

The 10% mass reduction temperature of each modified polyolefin resin was determined using a simultaneous thermogravimetric and differential thermal analysis device (TG-DTA7300, manufactured by Seiko Instruments Inc.) by placing 10 mg of the sample in an aluminum pan, heating at a temperature increase rate of 10°C/min while allowing dry air to flow at a flow rate of 200 mL/min, and measuring the temperature at which the mass decreased by 10% from the initial mass (10 mg).

3. Preparation of polyamide resin compositions

The above materials were mixed in a tumbler blender at the composition ratios shown in Tables 1 to 9 (unit: parts by mass) and melt-kneaded using a 30 mm$\varphi$ vent-type twin-screw extruder at a cylinder temperature of 300 to 335°C. Then the kneaded product was extruded into strands and cooled in a water tank. Thereafter, the strands were collected by a pelletizer and cut to thereby obtain a polyamide resin composition in the form of pellets.

4. Evaluation

<Heat shock resistance>

An insert member made of S45C as specified in JIS G4051:2016 for carbon steel for machine structural use (54 mm $\times$ 54 mm $\times$ 2 mm) was placed in a mold for metal insert molding mounted on an injection molding machine (manufactured by Sumitomo Heavy Industries, Ltd., SE75EV). Then, each of the various polyamide resin compositions was injection molded into the mold under conditions of cylinder setting temperature of 335°C, mold temperature of 160°C, and injection speed of 50 mm/sec to produce a metal insert test piece.

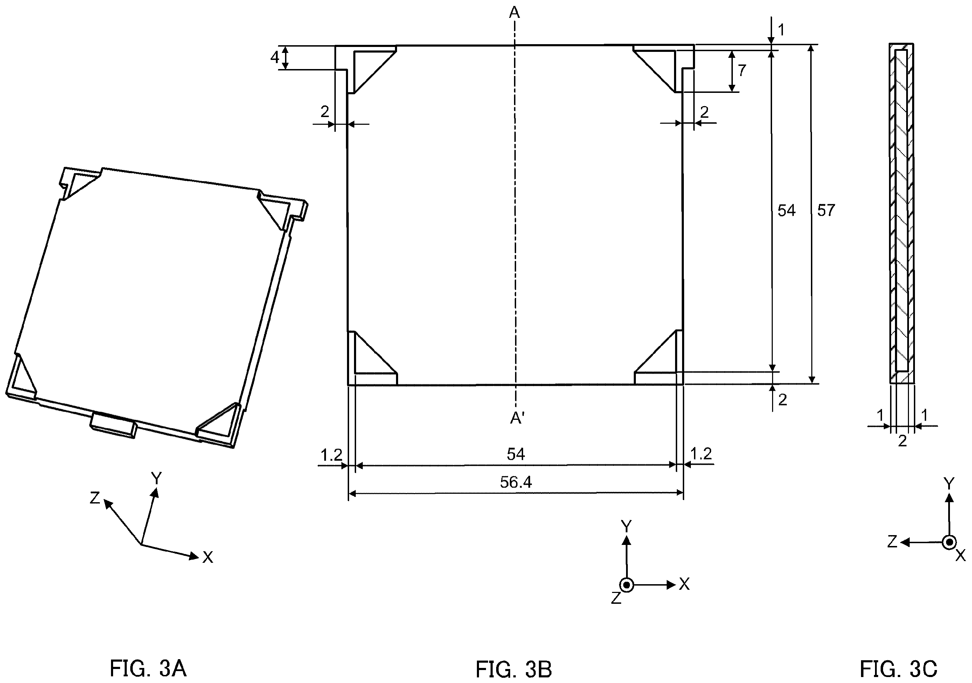

FIG. 3A is a perspective view illustrating the shape of a test piece prepared for evaluating heat shock resistance, FIG. 3B is a plan view of the test piece, and FIG. 3C is a cross-sectional view of the insert test piece taken along line A-A' illustrated in FIG. 3B. The numbers in FIGS. 3B and 3C indicate dimensions (unit: mm). As illustrated in FIGS. 3A to 3C, insert molding was performed so that the upper, lower and side surfaces of the insert member were covered with a 56.4 mm $\times$ 57 mm rectangular parallelepiped resin part (thickness: 1 mm on the upper and lower surfaces and 2 mm (same thickness as the insert member) on the side surfaces) that was 1 mm larger from the four sides of the test piece in a plan view toward the gate portion (Y direction in FIG. 3B ), 2 mm larger in the direction opposite to the gate portion (opposite to the Y direction in FIG. 3B ), and 1.2 mm larger in each of the outward directions of the remaining two sides (X direction and the direction opposite to X direction in FIG. 3B). However, to hold the insert member in the mold, at each of the four sides of the test piece, a notch in the shape of a right-angled isosceles triangle with two sides each having a length of 7 mm was provided, and the top and bottom surfaces of the test piece were not covered with resin in the notch. The side surfaces of the test piece at the notches were covered with the resin part. At the end of the resin part on the gate portion side, resin reservoir portions were provided, each continuously formed from the resin part covering the side surface of the test piece at the notch, in the outward direction (X direction in FIG. 3B and its opposite direction) orthogonal to the resin flow direction. The resin reservoir portion has the dimension of 2 mm (outward direction: X direction and its opposite direction) $\times$ 4 mm (direction opposite to Y direction) $\times$ 2 mm (thickness). In addition, at the end of the resin part facing the gate portion, a resin reservoir portion was provided to prevent the formation of a weld portion in the part adjacent to the insert member of the resin part.

For this test piece, a heat shock test was conducted using a cold-heat shock tester (manufactured by Espec Corp.), with one cycle consisting of holding at -40°C for 30 minutes and then at 160°C for 30 minutes. The presence of cracks was observed every 5 cycles, and the number of cycles until a crack occurred was measured. This measurement was performed 5 times for each test piece, and the average of the measured cycle numbers was calculated. When the calculated number is 0, it indicates that a crack occurred immediately after molding, and when it is 1 or more, it indicates that no crack occurred immediately after molding.

<Tensile Strength and Tensile Modulus>

Each polyamide resin composition was injected under the following conditions to obtain an ISO dumbbell-shaped test piece Type A with a thickness of 4.0 mm.

Molding machine: SG50M3, manufactured by Sumitomo Heavy Industries, Ltd.
Molding machine cylinder temperature: melting point of polyamide resin + 10°C
Mold temperature: 160°C

The obtained test piece was left to stand at a temperature of 23°C in a nitrogen atmosphere for 24 hours. Then, in accordance with ISO 527, a tensile test was conducted at a temperature of -40°C and a relative humidity of 50%, and the tensile strength and tensile modulus in tension were measured.

<Flowability>

Each polyamide resin composition was injected using a bar flow mold having a width of 10 mm and a thickness of 0.5 mm under the following conditions, and the flow length (mm) of the resin composition in the mold was measured.

Injection molding machine: Tuparl TR40S3A, manufactured by Sodick Co., Ltd.
Injection setting pressure: 2,000 kg/cm$^2$
Cylinder setting temperature: melting point of polyamide resin + 10°C
Mold temperature: 160°C

Tables 1 to 9 show the composition and evaluation results of each polyamide resin composition. The numerical values of the compositions in Tables 1 to 9 represent parts by mass.

[Table 1]

| | | Example 1 | Example 2 | Example 3 | Example 4 |
|---|---|---|---|---|---|
| Polyamide resin (A) | Polyamide resin (A-1) | 39.30 | 39.30 | 39.30 | 39.30 |
| | Polyamide resin (A-2) | | | | |
| | Polyamide resin (A-3) | | | | |
| | Polyamide resin (A-4) | | | | |
| | Polyamide resin (A-5) | | | | |
| | Polyamide resin (A-6) | 4.35 | 4.35 | 4.35 | 4.35 |
| Reinforcing material (B) | Glass fiber | 40.00 | 35.00 | 30.00 | 20.00 |
| Modified polyolefin resin (C) | Modified polyolefin resin (C-1) E' = 3.4 × 10$^7$ Pa | 5.00 | 5.00 | 5.00 | 5.00 |
| | Modified polyolefin resin (C-2) E' = 2.4 × 10$^8$ Pa | | | | |
| | Modified polyolefin resin (C-3) E' = 7.9 × 10$^9$ Pa | | | | |
| | Modified polyolefin resin (C-4) E' = 1.5 × 10$^9$ Pa | | | | |
| Inorganic particles (D) | Glass flake | 10.00 | 15.00 | 20.00 | 30.00 |
| | Mica particles 1 | | | | |
| | Mica particles 2 | | | | |
| | Mica particles 3 | | | | |
| Polyolefin resin | | | | | |

(continued)

|  |  | Example 1 | Example 2 | Example 3 | Example 4 |
|---|---|---|---|---|---|
| Nucleating agent | | 0.35 | 0.35 | 0.35 | 0.35 |
| Lubricant | | 0.25 | 0.25 | 0.25 | 0.25 |
| Colorant | | 0.75 | 0.75 | 0.75 | 0.75 |
| (B)+(D) | | 50.00 | 50.00 | 50.00 | 50.00 |
| (D)/(B)+(D) | | 20% | 30% | 40% | 60% |
| Total | | 100.00 | 100.00 | 100.00 | 100.00 |
| Evaluation | Heat shock resistance (Cycle count) | 33 | 104 | 193 | 235 |
| | Tensile strength [MPa] | 281 | 261 | 234 | 185 |
| | Tensile modulus [MPa] | 12250 | 12520 | 11740 | 10920 |
| | Flowability [mm] | 20 | 25 | 24 | 27 |

[Table 2]

|  |  | Example 5 | Example 6 |
|---|---|---|---|
| Polyamide resin (A) | Polyamide resin (A-1) | 48.28 | 43.33 |
| | Polyamide resin (A-2) | | |
| | Polyamide resin (A-3) | | |
| | Polyamide resin (A-4) | | |
| | Polyamide resin (A-5) | | |
| | Polyamide resin (A-6) | 5.37 | 4.82 |
| Reinforcing material (B) | Glass fiber | 30.00 | 30.00 |
| Modified polyolefin resin (C) | Modified polyolefin resin (C-1) $E' = 3.4 \times 10^7$ Pa | 5.00 | 5.50 |
| | Modified polyolefin resin (C-2) $E' = 2.4 \times 10^8$ Pa | | |
| | Modified polyolefin resin (C-3) $E' = 7.9 \times 10^7$ Pa | | |
| | Modified polyolefin resin (C-4) $E' = 1.5 \times 10^9$ Pa | | |
| Inorganic particles (D) | Glass flake | 10.00 | 15.00 |
| | Mica particles 1 | | |
| | Mica particles 2 | | |
| | Mica particles 3 | | |
| Polyolefin resin | | | |
| Nucleating agent | | 0.35 | 0.35 |
| Lubricant | | 0.25 | 0.25 |
| Colorant | | 0.75 | 0.75 |
| (B)+(D) | | 40.00 | 45.00 |
| (D)/(B)+(D) | | 25% | 33% |
| Total | | 100.00 | 100.00 |

(continued)

| | | Example 5 | Example 6 |
|---|---|---|---|
| Evaluation | Heat shock resistance (Cycle count) | 21 | 85 |
| | Tensile strength [MPa] | 215 | 221 |
| | Tensile modulus [MPa] | 10520 | 11560 |
| | Flowability [mm] | 28 | 25 |

[Table 3]

| | | Example 7 | Example 8 | Example 9 |
|---|---|---|---|---|
| Polyamide resin (A) | Polyamide resin (A-1) | 41.53 | 37.03 | 34.78 |
| | Polyamide resin (A-2) | | | |
| | Polyamide resin (A-3) | | | |
| | Polyamide resin (A-4) | | | |
| | Polyamide resin (A-5) | | | |
| | Polyamide resin (A-6) | 4.62 | 4.12 | 3.87 |
| Reinforcing material (B) | Glass fiber | 30.00 | 30.00 | 30.00 |
| Modified polyolefin resin (C) | Modified polyolefin resin (C-1) $E' = 3.4 \times 10^7$ Pa | 2.50 | 7.50 | 10.00 |
| | Modified polyolefin resin (C-2) $E' = 2.4 \times 10^8$ Pa | | | |
| | Modified polyolefin resin (C-3) $E' = 7.9 \times 10^7$ Pa | | | |
| | Modified polyolefin resin (C-4) $E' = 1.5 \times 10^9$ Pa | | | |
| Inorganic particles (D) | Glass flake | 20.00 | 20.00 | 20.00 |
| | Mica particles 1 | | | |
| | Mica particles 2 | | | |
| | Mica particles 3 | | | |
| Polyolefin resin | | | | |
| Nucleating agent | | 0.35 | 0.35 | 0.35 |
| Lubricant | | 0.25 | 0.25 | 0.25 |
| Colorant | | 0.75 | 0.75 | 0.75 |
| (B)+(D) | | 50.00 | 50.00 | 50.00 |
| (D)/(B)+(D) | | 40% | 40% | 40% |
| Total | | 100.00 | 100.00 | 100.00 |
| Evaluation | Heat shock resistance (Cycle count) | 18 | 98 | 115 |
| | Tensile strength [MPa] | 263 | 227 | 219 |
| | Tensile modulus [MPa] | 12640 | 10800 | 9950 |
| | Flowability [mm] | 26 | 20 | 15 |

[Table 4]

| | | Example 10 | Example 11 | Example 12 |
|---|---|---|---|---|
| Polyamide resin (A) | Polyamide resin (A-1) | 39.30 | 39.30 | 39.30 |
| | Polyamide resin (A-2) | | | |
| | Polyamide resin (A-3) | | | |
| | Polyamide resin (A-4) | | | |
| | Polyamide resin (A-5) | | | |
| | Polyamide resin (A-6) | 4.35 | 4.35 | 4.35 |
| Reinforcing material (B) | Glass fiber | 30.00 | 30.00 | 30.00 |
| Modified polyolefin resin (C) | Modified polyolefin resin (C-1) $E' = 3.4 \times 10^7$ Pa | 5.00 | 5.00 | 5.00 |
| | Modified polyolefin resin (C-2) $E' = 2.4 \times 10^8$ Pa | | | |
| | Modified polyolefin resin (C-3) $E' = 7.9 \times 10^7$ Pa | | | |
| | Modified polyolefin resin (C-4) $E' = 1.5 \times 10^9$ Pa | | | |
| Inorganic particles (D) | Glass flake | | | |
| | Mica particles 1 | 20.00 | | |
| | Mica particles 2 | | 20.00 | |
| | Mica particles 3 | | | 20.00 |
| Polyolefin resin | | | | |
| Nucleating agent | | 0.35 | 0.35 | 0.35 |
| Lubricant | | 0.25 | 0.25 | 0.25 |
| Colorant | | 0.75 | 0.75 | 0.75 |
| (B)+(D) | | 50.00 | 50.00 | 50.00 |
| (D)/(B)+(D) | | 40% | 40% | 40% |
| Total | | 100.00 | 100.00 | 100.00 |
| Evaluation | Heat shock resistance (Cycle count) | 64 | 73 | 28 |
| | Tensile strength [MPa] | 215 | 229 | 224 |
| | Tensile modulus [MPa] | 12014 | 11920 | 11962 |
| | Flowability [mm] | 24 | 27 | 27 |

[Table 5]

| | | Example 13 | Example 14 | Example 15 |
|---|---|---|---|---|
| Polyamide resin (A) | Polyamide resin (A-1) | | | |
| | Polyamide resin (A-2) | 39.30 | | |
| | Polyamide resin (A-3) | | 39.30 | |
| | Polyamide resin (A-4) | | | |
| | Polyamide resin (A-5) | | | 43.65 |
| | Polyamide resin (A-6) | 4.35 | 4.35 | |
| Reinforcing material (B) | Glass fiber | 30.00 | 30.00 | 30.00 |

(continued)

|  |  | Example 13 | Example 14 | Example 15 |
|---|---|---|---|---|
| Modified polyolefin resin (C) | Modified polyolefin resin (C-1) E' = $3.4 \times 10^7$ Pa | 5.00 | 5.00 | 5.00 |
|  | Modified polyolefin resin (C-2) E' = $2.4 \times 10^8$ Pa |  |  |  |
|  | Modified polyolefin resin (C-3) E' = $7.9 \times 10^7$ Pa |  |  |  |
|  | Modified polyolefin resin (C-4) E' = $1.5 \times 10^9$ Pa |  |  |  |
| Inorganic particle (D) | Glass flake | 20.00 | 20.00 | 20.00 |
|  | Mica particle 1 |  |  |  |
|  | Mica particle 2 |  |  |  |
|  | Mica particle 3 |  |  |  |
| Polyolefin resin |  |  |  |  |
| Nucleating agent |  | 0.35 | 0.35 | 0.35 |
| Lubricant |  | 0.25 | 0.25 | 0.25 |
| Colorant |  | 0.75 | 0.75 | 0.75 |
| (B)+(D) |  | 50.00 | 50.00 | 50.00 |
| (D)/(B)+(D) |  | 40% | 40% | 40% |
| Total |  | 100.00 | 100.00 | 100.00 |
| Evaluation | Heat shock resistance (Cycle count) | 59 | 112 | 163 |
|  | Tensile strength [MPa] | 241 | 234 | 274 |
|  | Tensile modulus [MPa] | 11632 | 11148 | 10980 |
|  | Flowability [mm] | 44 | 31 | 35 |

[Table 6]

|  |  | Example 16 | Example 17 | Example 18 |
|---|---|---|---|---|
| Polyamide resin (A) | Polyamide resin (A-1) | 43.65 | 39.3 | 39.30 |
|  | Polyamide resin (A-2) |  | 4.35 |  |
|  | Polyamide resin (A-3) |  |  |  |
|  | Polyamide resin (A-4) |  |  | 4.35 |
|  | Polyamide resin (A-5) |  |  |  |
|  | Polyamide resin (A-6) |  |  |  |
| Reinforcing material (B) | Glass fiber | 30.00 | 30.00 | 30.00 |
| Modified polyolefin resin (C) | Modified polyolefin resin (C-1) E' = $3.4 \times 10^7$ Pa | 5.00 | 5.00 | 5.00 |
|  | Modified polyolefin resin (C-2) E' = $2.4 \times 10^8$ Pa |  |  |  |
|  | Modified polyolefin resin (C-3) E' = $7.9 \times 10^7$ Pa |  |  |  |
|  | Modified polyolefin resin (C-4) E' = $1.5 \times 10^9$ Pa |  |  |  |

(continued)

|  |  | Example 16 | Example 17 | Example 18 |
|---|---|---|---|---|
| Inorganic particle (D) | Glass flake | 20.00 | 20.00 | 20.00 |
|  | Mica particle 1 |  |  |  |
|  | Mica particle 2 |  |  |  |
|  | Mica particle 3 |  |  |  |
| Polyolefin resin |  |  |  |  |
| Nucleating agent |  | 0.35 | 0.35 | 0.35 |
| Lubricant |  | 0.25 | 0.25 | 0.25 |
| Colorant |  | 0.75 | 0.75 | 0.75 |
| (B)+(D) |  | 50.00 | 50.00 | 50.00 |
| (D)/(B)+(D) |  | 40% | 40% | 40% |
| Total |  | 100.00 | 100.00 | 100.00 |
| Evaluation | Heat shock resistance (Cycle count) | 168 | 173 | 182 |
|  | Tensile strength [MPa] | 233 | 236 | 230 |
|  | Tensile modulus [MPa] | 11810 | 11720 | 11620 |
|  | Flowability [mm] | 22 | 29 | 23 |

[Table 7]

|  |  | Comp. Ex. 1 | Comp. Ex. 2 | Comp. Ex. 3 |
|---|---|---|---|---|
| Polyamide resin (A) | Polyamide resin (A-1) | 48.65 | 39.30 | 43.78 |
|  | Polyamide resin (A-2) |  |  |  |
|  | Polyamide resin (A-3) |  |  |  |
|  | Polyamide resin (A-4) |  |  |  |
|  | Polyamide resin (A-5) |  |  |  |
|  | Polyamide resin (A-6) |  | 4.35 | 4.87 |
| Reinforcing material (B) | Glass fiber | 50.00 | 10.00 | 30.00 |
| Modified polyolefin resin (C) | Modified polyolefin resin (C-1) $E' = 3.4 \times 10^7$ Pa |  | 5.00 |  |
|  | Modified polyolefin resin (C-2) $E' = 2.4 \times 10^8$ Pa |  |  |  |
|  | Modified polyolefin resin (C-3) $E' = 7.9 \times 10^7$ Pa |  |  |  |
|  | Modified polyolefin resin (C-4) $E' = 1.5 \times 10^9$ Pa |  |  |  |
| Inorganic particle (D) | Glass flake |  | 40.00 | 20.00 |
|  | Mica particle 1 |  |  |  |
|  | Mica particle 2 |  |  |  |
|  | Mica particle 3 |  |  |  |
| Polyolefin resin |  |  |  |  |
| Nucleating agent |  | 0.35 | 0.35 | 0.35 |
| Lubricant |  | 0.25 | 0.25 | 0.25 |

# EP 4 663 374 A1

(continued)

| | | Comp. Ex. 1 | Comp. Ex. 2 | Comp. Ex. 3 |
|---|---|---|---|---|
| Colorant | | 0.75 | 0.75 | 0.75 |
| (B)+(D) | | 50.00 | 50.00 | 50.00 |
| (D)/(B)+(D) | | 0 | 80% | 40% |
| Total | | 100 | 100 | 100 |
| Evaluation | Heat shock resistance (Number of cycles) | 0 | Compound not possible | 4 |
| | Tensile strength [MPa] | 334 | | 264 |
| | Tensile modulus [MPa] | 14320 | | 12860 |
| | Flowability [mm] | 15 | | 16 |

[Table 8]

| | | Comp. Ex. 4 | Comp. Ex. 5 | Comp. Ex. 6 | Comp. Ex. 7 |
|---|---|---|---|---|---|
| Polyamide resin (A) | Polyamide resin (A-1) | 39.30 | 39.30 | 39.30 | 39.30 |
| | Polyamide resin (A-2) | | | | |
| | Polyamide resin (A-3) | | | | |
| | Polyamide resin (A-4) | | | | |
| | Polyamide resin (A-5) | | | | |
| | Polyamide resin (A-6) | 4.35 | 4.35 | 4.35 | 4.35 |
| Reinforcing material (B) | Glass fiber | 50.00 | 50.00 | 50.00 | 50.00 |
| Modified polyolefin resin (C) | Modified polyolefin resin (C-1) $E' = 3.4 \times 10$ Pa | | | | |
| | Modified polyolefin resin (C-2) $E' = 2.4 \times 10^8$ Pa | 5.00 | | | |
| | Modified polyolefin resin (C-3) $E' = 7.9 \times 10^7$ Pa | | 5.00 | | |
| | Modified polyolefin resin (C-4) $E' = 1.5 \times 10^9$ Pa | | | 5.00 | |
| Inorganic particle (D) | Glass flake | | | | |
| | Mica particle 1 | | | | |
| | Mica particle 2 | | | | |
| | Mica particle 3 | | | | |
| Polyolefin resin | | | | | 5.00 |
| Nucleating agent | | 0.35 | 0.35 | 0.35 | 0.35 |
| Lubricant | | 0.25 | 0.25 | 0.25 | 0.25 |
| Colorant | | 0.75 | 0.75 | 0.75 | 0.75 |
| (B)+(D) | | 50.00 | 50.00 | 50.00 | 50.00 |
| (D)/(B)+(D) | | 0% | 0% | 0% | 0% |
| Total | | 100 | 100 | 100 | 100 |

(continued)

|  |  | Comp. Ex. 4 | Comp. Ex. 5 | Comp. Ex. 6 | Comp. Ex. 7 |
|---|---|---|---|---|---|
| Evaluation | Heat shock resistance (Number of cycles) | 7 | 9 | 5 | 10 |
|  | Tensile strength [MPa] | 330 | 317 | 324 | 307 |
|  | Tensile modulus [MPa] | 13460 | 13310 | 13550 | 13110 |
|  | Flowability [mm] | 29 | 32 | 29 | 32 |

[Table 9]

|  |  | Comp. Ex. 8 | Comp. Ex. 9 | Comp. Ex. 10 | Comp. Ex. 11 |
|---|---|---|---|---|---|
| Polyamide resin (A) | Polyamide resin (A-1) | 41.53 | 41.53 | 41.53 | 41.53 |
|  | Polyamide resin (A-2) |  |  |  |  |
|  | Polyamide resin (A-3) |  |  |  |  |
|  | Polyamide resin (A-4) |  |  |  |  |
|  | Polyamide resin (A-5) |  |  |  |  |
|  | Polyamide resin (A-6) | 4.62 | 4.62 | 4.62 | 4.62 |
| Reinforcing material (B) | Glass fiber | 30.00 | 30.00 | 30.00 | 50.00 |
| Modified polyolefin resin (C) | Modified polyolefin resin (C-1) $E' = 3.4 \times 10^7$ Pa |  |  |  | 2.50 |
|  | Modified polyolefin resin (C-2) $E' = 2.4 \times 10^8$ Pa | 2.50 |  |  |  |
|  | Modified polyolefin resin (C-3) $E' = 7.9 \times 10^7$ Pa |  | 2.50 |  |  |
|  | Modified polyolefin resin (C-4) $E' = 1.5 \times 10^9$ Pa |  |  | 2.50 |  |
| Inorganic particle (D) | Glass flake | 20.00 | 20.00 | 20.00 |  |
|  | Mica particle 1 |  |  |  |  |
|  | Mica particle 2 |  |  |  |  |
|  | Mica particle 3 |  |  |  |  |
|  | Polyolefin resin |  |  |  |  |
|  | Nucleating agent | 0.35 | 0.35 | 0.35 | 0.35 |
|  | Lubricant | 0.25 | 0.25 | 0.25 | 0.25 |
|  | Colorant | 0.75 | 0.75 | 0.75 | 0.75 |
|  | (B)+(D) | 50.00 | 50.00 | 50.00 | 50.00 |
|  | (D)/(B)+(D) | 40% | 40% | 40% | 0% |
|  | Total | 100 | 100 | 100 | 100 |
| Evaluation | Heat shock resistance (Number of cycles) | 5 | 7 | 5 | 7 |
|  | Tensile strength [MPa] | 272 | 264 | 268 | 331 |
|  | Tensile modulus [MPa] | 12810 | 12710 | 12900 | 13500 |
|  | Flowability [mm] | 34 | 37 | 35 | 17 |

Comparing Examples 1 to 18 each containing the modified polyolefin resin (C) and the inorganic particles (D) with Comp. Ex. 1 not containing them, it was found that Examples 1 to 18 could suppress crack occurrence immediately after molding. In addition, in Examples 1 to 18 using the modified polyolefin resin (C) having a storage modulus E' of $7.0 \times 10^7$ Pa or less at -40°C and the flake-shaped or plate-shaped inorganic particles (D), the heat shock resistance of the resin member was better than in Comp. Ex.s 1 to 11. It is considered that the modified polyolefin resin (C) and the inorganic particles (D) were able to suppress the occurrence of cracks at a low temperature when the resin member was repeatedly subjected to cold-heat shock.

Also, as shown in Comp. Ex.s 8 to 10, using only one of the modified polyolefin resin (C) and the inorganic particles (D) could not increase the heat shock resistance of the resin member. From these results, it is understood that the synergistic effect of the modified polyolefin resin (C) and the inorganic particles (D) is necessary to improve the heat shock resistance of the resin member.

In addition, as shown in Examples 1 to 4, it was found that the heat shock resistance improves as the proportion of the inorganic particles (D) to the sum of the amount of the reinforcing material (B) and the amount of the inorganic particles (D) increases.

Example 3, which includes amorphous polyamide resin, was found to have improved heat shock resistance compared to Example 16, which does not include amorphous polyamide resin. This is considered to be because the crystallinity of the polyamide resin was reduced, thereby decreasing the shrinkage rate of the polyamide resin composition.

Moreover, Example 3 using 6T6I as the polyamide resin (A) had better heat shock resistance than Examples 13 to 15 using another polyamide resin.

This application claims priority to Japanese Patent Application No. 2023-017664, filed on February 8, 2023, the disclosure of which including the specification, and drawings is incorporated herein by reference in its entirety.

Industrial Applicability

The polyamide resin composition for insert molding of the present invention can suppress cracks occurring immediately after molding and increase the heat shock resistance of metal-resin composites. Therefore, insert molded products using the above polyamide resin composition are useful for parts used in low-temperature environments (e.g., automotive parts).

Reference Signs List

> 100 Bus bar unit
> 110 Bus bar
> 120 Holding member
> 200 Moving object
> 210 Machine body
> 220 Power source
> 230 Drive unit
> 232 Inverter
> 234 Motor
> 235 Reduction gear
> 236 Motor case

Claims

1. A polyamide resin composition for insert molding, the polyamide resin composition comprising:

> a polyamide resin (A);
> a reinforcing material (B) with a content of 10 mass% or more and 50 mass% or less based on a total mass of the polyamide resin composition;
> a modified polyolefin resin (C) with a content of 1 mass% or more and 10 mass% or less based on the total mass of the polyamide resin composition; and
> an inorganic particle (D) with a content of 5 mass% or more and less than 40 mass% based on the total mass of the polyamide resin composition, the inorganic particle (D) being flake-shaped or plate-shaped,

wherein

a storage modulus E' of the modified polyolefin resin (C) at -40°C is $7.0 \times 10^7$ Pa or less.

2. The polyamide resin composition according to claim 1, wherein the polyamide resin (A) includes a polyamide resin (A1) having a melting point (Tm) of 280°C or higher as measured by a differential scanning calorimeter (DSC).

3. The polyamide resin composition according to claim 2, wherein the polyamide resin (A1) includes two or more types of polyamide resins having compositions different to each other.

4. The polyamide resin composition according to claim 2 or 3, wherein the polyamide resin (A) includes a polyamide resin (A2) having a heat of fusion (ΔH) of 5 J/g or less as measured by differential scanning calorimetry (DSC).

5. The polyamide resin composition according to claim 1, wherein the polyamide resin (A) includes a polyamide resin (A2) having a heat of fusion (ΔH) of 5 J/g or less as measured by differential scanning calorimetry (DSC).

6. The polyamide resin composition according to any one of claims 1 to 5, wherein the content of the reinforcing material (B) is 20 mass% or more and 40 mass% or less based on the total mass of the polyamide resin composition.

7. The polyamide resin composition according to any one of claims 1 to 6, wherein the content of the inorganic particle (D) is 10 mass% or more and 30 mass% or less based on the total mass of the polyamide resin composition.

8. The polyamide resin composition according to any one of claims 1 to 7, wherein a density of the modified polyolefin resin (C) is 850 kg/m$^3$ or more and 880 kg/m$^3$ or less.

9. The polyamide resin composition according to any one of claims 1 to 8, wherein the modified polyolefin resin (C) includes a functional group structural unit with a content of 0.1 mass% or more and 5.0 mass% or less based on a total mass of the modified polyolefin resin (C).

10. The polyamide resin composition according to claim 9, wherein the content of the functional group structural unit is 0.5 mass% or more and 2.0 mass% or less based on the total mass of the modified polyolefin resin (C).

11. The polyamide resin composition according to any one of claims 1 to 10, wherein the modified polyolefin resin (C) has a feature such that when the modified polyolefin resin (C) is heated at a temperature increase rate of 10°C/min while dry air flows at a flow rate of 200 mL/min, a temperature at which a mass reduction percentage becomes 10% is 335°C or higher.

12. The polyamide resin composition according to any one of claims 1 to 11, wherein:

a sum of the content of the reinforcing material (B) and the content of the inorganic particle (D) is 30 mass% or more and 55 mass% or less based on the total mass of the polyamide resin composition; and
the content of the inorganic particle (D) is 20 mass% or more and 60 mass% or less based on the sum of the content of the reinforcing material (B) and the content of the inorganic particle (D).

13. The polyamide resin composition according to any one of claims 1 to 12, wherein:

the polyamide resin (A1) includes a dicarboxylic acid-derived component unit (A1a) and a diamine-derived component unit (A1b);
the dicarboxylic acid-derived component unit (A1a) includes, based on a total molar number of the dicarboxylic acid-derived component unit (A1b), 55 mol% or more and 75 mol% or less of a component unit derived from terephthalic acid and 25 mol% or more and 45 mol% or less of a component unit derived from isophthalic acid; and
the diamine-derived component unit (A1b) includes a component unit derived from an aliphatic diamine having 4 to 15 carbon atoms.

14. A metal-resin composite, comprising:

a metal member; and
a resin member including the polyamide resin composition according to any one of claims 1 to 13, the polyamide resin composition being combined with the metal member.

**15.** A method for producing a metal-resin composite, the method comprising:

placing a metal member in a mold; and
injecting the polyamide resin composition according to any one of claims 1 to 13 into the mold to fill the mold in which the metal member is placed.

100

110

110

110

120

FIG. 1

FIG. 2

FIG. 3C

FIG. 3B

FIG. 3A

## INTERNATIONAL SEARCH REPORT

| International application No. |
| --- |
| **PCT/JP2024/003626** |

**A. CLASSIFICATION OF SUBJECT MATTER**

*B29C 45/14*(2006.01)i; *C08F 8/46*(2006.01)i; *C08G 69/26*(2006.01)i; *C08K 3/013*(2018.01)i; *C08L 23/26*(2006.01)i; *C08L 77/06*(2006.01)i
FI: B29C45/14; C08K3/013; C08L23/26; C08G69/26; C08F8/46; C08L77/06

According to International Patent Classification (IPC) or to both national classification and IPC

**B. FIELDS SEARCHED**

Minimum documentation searched (classification system followed by classification symbols)

B29C45/14; C08F8/46; C08G69/26; C08K3/013; C08L23/26; C08L77/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2020-180280 A (EMS PATENT AG) 05 November 2020 (2020-11-05) | 1-15 |
| A | JP 2009-161748 A (MITSUBISHI ENGINEERING PLASTICS CORP.) 23 July 2009 (2009-07-23) | 1-15 |
| A | JP 2022-71227 A (TAISEI PLUS KK) 16 May 2022 (2022-05-16) | 1-15 |

☐ Further documents are listed in the continuation of Box C.　☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **26 March 2024** | **09 April 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/003626**

| Patent document cited in search report | | | Publication date (day/month/year) | Patent family member(s) | | | Publication date (day/month/year) |
|---|---|---|---|---|---|---|---|
| JP | 2020-180280 | A | 05 November 2020 | US | 2020/0332118 | A1 | |
| | | | | EP | 3725833 | A1 | |
| | | | | KR | 10-2020-0123006 | A | |
| | | | | CN | 111825977 | A | |
| JP | 2009-161748 | A | 23 July 2009 | (Family: none) | | | |
| JP | 2022-71227 | A | 16 May 2022 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010510374 A
- JP 2020180280 A
- WO 03085029 A
- JP 2023017664 A